# DEMANDE DE BREVET EUROPEEN

(11) **EP 1 381 203 A1**
(43) Date de publication de la demande: **14.01.2004**
(21) Numéro de dépôt: 03364016.0
(22) Date de dépôt: 10.07.2003
(51) Int. Cl.: H04L 29/08

(54) **Procédé et système de gestion de la fourniture à un terminal de données gérées par un réseau externe, et équipement intermédiaire correspondant**

(30) Priorité: 10.07.2002 FR 0208706
(71) Demandeur: Volubill, 38330 Montbonnot Saint-Martin (FR)
(72) Inventeur: Bouthors, Nicolas, 38240 Meylan (FR)
(74) Mandataire: Vidon, Patrice

(57) **Abrégé**

L'invention concerne un procédé de gestion de la fourniture, à au moins un terminal d'au moins un réseau de communication, de données gérées par au moins un serveur de contenu d'au moins un réseau externe. Le (au moins un) terminal peut demander et/ou recevoir les données via au moins deux canaux de fourniture de données entre le (au moins un) terminal et le (au moins un) serveur de contenu. Selon l'invention, on définit au moins un domaine de service, correspondant à au moins une portion des données d'au moins un des serveurs. Lors de la fourniture au (au moins un) terminal de données appartenant au domaine de service, on gère, dans au moins un équipement intermédiaire traversé par les (au moins deux) canaux et participant à la liaison entre le (au moins un) réseau de communication et le (au moins un) réseau externe, une session de service au cours de laquelle est utilisé au moins un des canaux. On effectue au moins un traitement particulier dans le cadre de la session de service.

## Description

Le domaine de l'invention est celui des systèmes de communication.

Plus précisément, l'invention concerne un procédé et un système de gestion de la fourniture, à au moins un terminal d'au moins un réseau de communication, de données gérées par au moins un serveur de contenu d'au moins un réseau externe.

L'invention s'applique notamment, mais non exclusivement, au cas où le terminal est un terminal mobile d'un réseau de radiocommunication et où les serveurs de contenu sont des serveurs WEB du réseau Internet.

Le réseau de radiocommunication utilise par exemple la norme GSM (pour "Global System for Mobile communications" en anglais), ou une norme équivalente ou concurrente telle que DCS 1800 (pour "Digital Cellular System à 1800 Mhz", en anglais), PCS 1900 (pour "Personal Communication System à 1900 MHz" en anglais), DECT (pour "Digital European Cordless Telecommunications" en anglais, GPRS (pour "General Packet Radio Service" en anglais) ou UTMS (pour "Universal Mobile Telecommunication System" en anglais).

Il est clair cependant que la présente invention s'applique également avec un terminal fixe d'un réseau filaire (par exemple le réseau téléphonique commuté) et/ou avec un réseau externe autre que le réseau Internet.

D'une façon générale, on entend par réseau externe un réseau indépendant du réseau d'accès que constitue le réseau de communication. Ce réseau externe permet à un fournisseur de contenus de mettre à disposition des données, généralement sous la forme de bases d'informations, au moyen de serveurs de contenu (aussi appelés serveurs de données). Dans le cas particulier précité où le réseau externe est le réseau Internet, les bases d'informations sont des « sites WEB » hébergés par des serveurs WEB.

Dans le cadre de la présente invention, et donc dans la suite de la description, on suppose que le terminal peut demander et/ou recevoir les données via au moins deux canaux de fourniture de données entre ce terminal et le(s) serveur(s) de contenu.

Ainsi, dans le cas particulier précité, le terminal mobile peut par exemple accéder aux données d'un ou plusieurs serveurs WEB via les deux canaux suivants :
- un canal WAP (« Wireless Application Protocol »). Typiquement, un micro-navigateur du terminal WAP, suite à une interaction avec un utilisateur, va envoyer une requête WAP encodée à une passerelle WAP (« WAP Gateway ») qui se charge de la décoder (en effectuant une conversion de protocoles entre le WAP (WTP) et le WEB (HTTP)) et de l'aiguiller vers le bon serveur WEB de contenu. En réponse, le serveur WEB envoie les pages à la passerelle WAP qui effectue la conversion entre le WEB et le WAP et encode les données contenues dans ces pages (afin de réduire leur taille) avant de les envoyer au terminal WAP. Le micro-navigateur du terminal WAP décode ces pages, les interprète et les affiche ;
- un canal SMS (« Short Message service »). Par exemple, en mode « pull » (le client réclame l'information dont il a besoin quand il en a besoin), un terminal mobile émet un message court (SMS) vers un serveur de contenu, identifié généralement par un numéro court. Le SMS est reçu par un centre de gestion des SMS (SMS-C) qui le met dans une file d'attente avant de le transmettre au serveur de contenu. A la réception du SMS, qui forme requête, le serveur de contenu envoie (via le SMS-C) un contenu donné au terminal mobile, au moyen d'un ou plusieurs SMS. On connaît également le mode « push » (le serveur de contenu prend l'initiative du transfert d'informations vers un terminal mobile), dans lequel le serveur de contenu confie à un serveur d'envoi automatique (« push server ») le soin d'envoyer (via le SMS-C) un contenu donné au terminal mobile, au moyen d'un ou plusieurs SMS.

On entend par « canal de fourniture de données » un environnement de fourniture de service lié à un ensemble de protocoles. Ces canaux sont parfois aussi appelés segments. L'invention s'applique aussi bien avec les canaux actuels que futurs.

A ce jour, les informations composant les bases d'informations des serveurs de contenu sont totalement indifférenciées, ce qui limite la gestion de ces informations. En d'autres termes, l'utilisateur n'accède pas à un service mais à un serveur de données, ou à plusieurs serveurs de données successivement. L'opérateur ne dispose d'aucun mécanisme lui permettant de valoriser sa position, à l'interface entre le réseau de (radio)communication et le réseau externe.

Les systèmes ou procédés de l'état de la technique, en particulier dans le monde de la radiocommunication mobile, présentent de ce fait des inconvénients majeurs. En effet, ils n'apportent ni ne prévoient :
- de solutions de dialogue entre l'utilisateur du terminal et le fournisseur de contenu gérant les serveurs de contenu. Entre autres, de manière générale et en particulier dans les deux modes précités (« pull » et « push ») de transmission de SMS vers un terminal mobile, il n'est jamais donné la possibilité de demander à l'utilisateur une confirmation avant transmission d'un contenu ;
- de solutions de contrôle de l'accès à un contenu donné par un utilisateur d'un terminal donné ;
- de solutions de tarification modulant transactions et données (types, durées et volumes de ces données), c'est-à-dire tenant compte notamment des données auxquelles l'utilisateur accède à partir de son terminal (mobile). Par exemple, on ne sait pas aujourd'hui gérer de façon simple et optimale la facturation de l'envoi à un même terminal mobile de plusieurs SMS successifs par un ou plusieurs serveurs de contenu.

Par tarification, on entend ici la fourniture, par un système de facturation géré par l'opérateur du réseau de (radio)communication, d'informations de facturation (« charging » en anglais) et/ou de valorisation (« rating » en anglais) et/ou d'autorisation dans le cas d'un mécanisme de pré-paiement (« prepaid authorization » en anglais).

Un autre inconvénient des systèmes ou procédés de l'état de la technique est qu'ils ne permettent pas de corréler des informations venant de canaux (segments) différents dans un seul service qui regrouperait plusieurs de ces canaux. En d'autres termes, l'utilisateur du terminal dispose actuellement de plusieurs canaux de fourniture de données, mais ne peut les utiliser que successivement et indépendamment les uns des autres. Par exemple, un terminal mobile ne peut pas aujourd'hui formuler une requête par le canal WAP et recevoir la réponse correspondante par le canal SMS.

Cette impossibilité actuelle de combiner des canaux de différentes natures implique en outre que chacun des canaux (WAP, SMS, ...) doit communiquer de façon indépendante avec le système de facturation précité. Par conséquent, le système de facturation doit effectuer plusieurs traitements, spécifiques chacun à un type de canal. Or, les systèmes de facturation actuels, qui doivent chacun traiter un grand nombre d'évènements (liés aux activités de plusieurs millions de clients), ne sont pas très flexibles et ont été conçus pour coopérer avec un seul canal. Leurs performances s'écroulent lorsqu'ils sont amenés à coopérer avec plusieurs canaux de natures différentes.

L'invention a notamment pour objectif de pallier ces différents inconvénients de l'état de la technique.

Plus précisément, l'un des objectifs de la présente invention est de fournir une technique de gestion de la fourniture, à un terminal d'un réseau de communication, de données gérées par un réseau externe, cette technique offrant des solutions de dialogue entre l'utilisateur du terminal et le fournisseur de contenu gérant les serveurs de contenu.

L'invention a également pour objectif de fournir une telle technique offrant des solutions de contrôle de l'accès à un contenu donné par un utilisateur d'un terminal donné.

Un autre objectif de l'invention est de fournir une telle technique offrant des solutions de tarification modulant transactions et données, et permettant de proposer un mode « kiosque » pour l'Internet dans le cas où le réseau externe est le réseau Internet.

Un objectif complémentaire de l'invention est de fournir une telle technique permettant de corréler des informations venant de canaux différents dans un seul service.

Encore un autre objectif de l'invention est de fournir une telle technique permettant de préserver les systèmes de facturation existants tout en maintenant leurs performances, même s'ils coopèrent avec plusieurs canaux de natures différentes (dans le cadre d'un service, rendu possible par l'invention, regroupant plusieurs canaux).

Encore un autre objectif de l'invention est de fournir une telle technique qui soit compatible avec les modes « pull » et « push » précités.

Encore un autre objectif de l'invention est de fournir une telle technique permettant de masquer aux fournisseurs de contenu les identifiants réels des terminaux (typiquement leurs numéros MSISDN, pour « Mobile Station Integrated Services Digital Network »).

Encore un autre objectif de l'invention est de fournir une telle technique permettant de modifier aisément le ou les canaux concernés et de prendre aisément en compte de nouveaux types de canaux.

Ces différents objectifs, ainsi que d'autres qui apparaîtront par la suite, sont atteints selon l'invention à l'aide d'un procédé de gestion de la fourniture, à au moins un terminal d'au moins un réseau de communication, de données gérées par au moins un serveur de contenu d'au moins un réseau externe. Ledit au moins un terminal pouvant demander et/ou recevoir lesdites données via au moins deux canaux de fourniture de données entre ledit au moins un terminal et ledit au moins un serveur de contenu. Selon l'invention, on définit au moins un domaine de service, correspondant à au moins une portion des données d'au moins un desdits serveurs. Lors de la fourniture audit au moins un terminal de données appartenant audit domaine de service, on gère, dans au moins un équipement intermédiaire traversé par lesdits au moins deux canaux et participant à la liaison entre ledit au moins un réseau de communication et ledit au moins un réseau externe, une session de service au cours de laquelle est utilisé au moins un desdits canaux. On effectue au moins un traitement particulier dans le cadre de ladite session de service.

La présente invention repose donc sur les notions de « domaine de service » et de « session de service ».

Le domaine de service identifie une partie des informations disponibles sur un ou plusieurs serveur(s) de contenu, de sorte que l'on puisse leur appliquer un traitement qui diffère de celui qui est appliqué aux informations n'appartenant pas à ce domaine. La notion de domaine de service au sein du réseau externe repose sur la représentation topologique du réseau externe, quelle que soit la réalisation physique de ce réseau externe.

Un service particulier est défini pour et associé à chaque domaine de service. On ouvre et on gère une session de ce service particulier, pour un terminal donné, dès lors que l'on a détecté que des données du domaine de service doivent être fournies à ce terminal donné. Cette détection peut s'effectuer par analyse des requêtes émises par le terminal (c'est par exemple le cas dans le mode « pull ») et/ou par analyse des données transmises au terminal (c'est par exemple le cas dans le mode « push »). Le maintien d'une session de service pour un terminal donné est fonction de la définition du service et des évènements (requêtes, réponses, notifications) se rapportant à la fourniture, à ce terminal, de données du domaine de service.

Par exemple, on entend par session de service, dans le cas où le réseau externe est le réseau Internet et où seul le canal WAP est utilisé (« session de service monocanal »), le fait qu'un utilisateur navigue pendant une durée donnée sur un sous-domaine particulier du WEB (réseau Internet) défini comme un domaine de service particulier. Dans cet exemple, l'ensemble de la navigation sur ce domaine de service particulier réalise une "session de service".

Egalement à titre d'exemple, on entend par session de service dans le cas où le réseau externe est le réseau Internet et où les canaux WAP et SMS sont utilisés (« session de service multicanal »), le fait qu'un utilisateur utilise son terminal mobile pour formuler une requête par le canal WAP et qu'il reçoive une réponse correspondante par le canal SMS. Dans cet exemple, l'ensemble formé par la requête et la réponse réalise une "session de service".

Comme expliqué ci-après, la présente invention permet à l'opérateur du réseau de communication (formant réseau d'accès au réseau externe) d'effectuer un certain nombre d'actions dans le cadre des sessions de service.

La gestion de sessions de service permet notamment, contrairement aux techniques de l'art antérieur, d'offrir des solutions de dialogue entre l'utilisateur du terminal et le fournisseur de contenu gérant les serveurs de contenu, ainsi que des solutions de contrôle de l'accès à un contenu donné par un utilisateur d'un terminal donné.

La gestion de sessions de service permet également la mise en oeuvre, par l'opérateur du réseau de communication, d'un mode kiosque pour l'Internet, dans le cas où le réseau externe est le réseau Internet, et en particulier pour l'"Internet mobile", si en outre le terminal est un terminal mobile. En d'autres termes, lorsque les usagers se font transmettre des données payantes par un ou plusieurs serveurs de contenu du réseau externe (ces derniers offrant un service à valeur ajoutée), la facturation et le recouvrement des factures est assurée par l'opérateur du réseau de communication qui reverse au fournisseur de contenu la part qui lui revient.

On notera que la présente invention permet la mise en oeuvre d'un mode kiosque aussi bien dans le cas d'un service utilisant un seul canal (« session de service monocanal ») que dans le cas d'un service utilisant une combinaison de plusieurs canaux (« session de service multicanal »).

Avantageusement, un seul desdits canaux est utilisé au cours de ladite session de service, dite session de service monocanal.

Dans une variante avantageuse, au moins deux desdits canaux sont utilisés au cours de ladite session de service, dite session de service multicanal.

Ainsi, dans cette variante, l'invention permet de corréler, dans une même session de service, des informations venant de canaux différents. En d'autres termes, on peut définir un ou plusieurs services combinant chacun plusieurs canaux. De cette façon, pour un service donné, le système de facturation n'effectue qu'un seul traitement, du fait qu'il ne « voit » qu'une seule entité, à savoir l'équipement intermédiaire, et qu'il effectue une gestion de la facturation basée sur la notion de session de service (et non pas sur la notion de canal). Ceci permet d'optimiser les performances du système de facturation. Ceci permet aussi d'en limiter les coûts puisqu'une partie de la technologie courante du système de facturation peut être préservée.

Avantageusement, ledit au moins un terminal appartient au groupe comprenant :
- des terminaux mobiles ;
- des terminaux fixes.

Préférentiellement, ledit au moins un réseau externe est un réseau de type Internet. En outre, les serveurs de données sont organisés en sites comprenant chacun une pluralité de pages et chaque domaine de service correspond à des pages prédéterminées d'au moins un site.

De façon préférentielle, lesdits canaux de fourniture de données appartiennent au groupe comprenant :
- des canaux de type WAP (« Wireless Application Protocol ») ;
- des canaux de type SMS (« Short Message service ») ;
- des canaux de type MMS (« Multimedia Message service ») ;
- des canaux de type EMS (« Enhanced Message service ») ;
- des canaux de type SVI (« Service Vocal Interactif ») ;
- des canaux de type WEB.

Dans un premier mode de réalisation particulier de l'invention, ledit procédé comprend les étapes préalables suivantes :
- un terminal, dit terminal demandeur/receveur, dudit au moins un réseau de communication émet, via au moins un desdits canaux, au moins une requête en vue de la réception de données appartenant audit domaine de service ;
- ladite requête est redirigée vers ledit au moins un équipement intermédiaire qui ouvre ladite session de service ;
   et, au cours de ladite session de service :

- ledit au moins un équipement intermédiaire redirige lui-même la requête vers ledit au moins un serveur de contenu ;
- ledit au moins un serveur de contenu retourne audit au moins un équipement intermédiaire une réponse comprenant au moins un message contenant lesdites données ;
- ledit au moins un équipement intermédiaire transmet, via au moins un desdits canaux, la réponse au terminal demandeur/receveur.

Dans un second mode de réalisation particulier de l'invention, ledit procédé comprend les étapes préalables suivantes :
- un premier terminal, dit terminal demandeur, d'un premier réseau de communication émet, via au moins un desdits canaux, au moins une requête en vue de la fourniture, à un second terminal, dit terminal receveur, d'un second réseau de communication confondu ou non avec ledit premier réseau de communication, de données appartenant audit domaine de service ;
- ladite requête est redirigée vers ledit au moins un équipement intermédiaire qui ouvre ladite session de service ;
   et, au cours de ladite session de service :

- ledit au moins un équipement intermédiaire redirige lui-même la requête vers ledit au moins un serveur de contenu ;
- ledit au moins un serveur de contenu fournit audit au moins un équipement intermédiaire une réponse comprenant au moins un message contenant lesdites données ;
- ledit au moins un équipement intermédiaire transmet, via au moins un desdits canaux, la réponse audit second terminal receveur.

Avantageusement, au cours de ladite session de service et avant l'étape de transmission de la requête audit au moins un serveur de contenu par ledit au moins un équipement intermédiaire :
- ledit au moins un équipement intermédiaire se procure auprès d'un système de facturation auquel il est relié un avis de facturation relatif à la fourniture de la réponse par ledit au moins un serveur de contenu ;
- ledit au moins un équipement intermédiaire transmet pour accord ledit avis de facturation au terminal demandeur/receveur, ou au terminal demandeur et/ou au terminal receveur ;
- si ledit au moins un équipement intermédiaire reçoit un accord sur l'avis de facturation, il effectue l'étape de transmission de la requête audit au moins un serveur de contenu.

Dans un troisième mode de réalisation particulier de l'invention, ledit procédé comprend les étapes préalables suivantes :
- ledit au moins un serveur de contenu émet au moins une requête en vue de la fourniture audit au moins terminal, par un serveur d'envoi automatique dudit au moins un réseau externe, de données appartenant audit domaine de service ;
- ledit serveur d'envoi automatique émet, via au moins un desdits canaux, au moins un message contenant lesdites données et destiné audit au moins terminal ;
- ledit au moins un message est redirigé vers ledit au moins un équipement intermédiaire qui ouvre ladite session de service,
   et, au cours de ladite session de service, ledit au moins un équipement intermédiaire transmet, via au moins un desdits canaux, ledit au moins un message au terminal.

Dans un quatrième mode de réalisation particulier de l'invention, ledit procédé comprend les étapes préalables suivantes :
- un premier terminal dudit au moins un réseau de communication émet, via au moins un desdits canaux, au moins un message destiné à un second terminal après avoir été modifié et/ou complété avec des données appartenant audit domaine de service ;
- ledit au moins un message est redirigé vers ledit au moins un équipement intermédiaire qui ouvre ladite session de service ;
et, au cours de ladite session de service :
- ledit au moins un équipement intermédiaire redirige lui-même ledit au moins un message vers ledit au moins un serveur de contenu ;
- ledit au moins un serveur de contenu modifie et/ou complète ledit au moins un message, et retourne audit au moins un équipement intermédiaire ledit au moins un message modifié et/ou complété ;
- ledit au moins un équipement intermédiaire transmet, via au moins un desdits canaux, ledit au moins un message modifié et/ou complété au second terminal.

Dans un cinquième mode de réalisation particulier de l'invention, ledit procédé comprend les étapes préalables suivantes :
- un utilisateur fournit un identifiant (MSISDN) d'un terminal audit au moins un serveur de contenu ;
- ledit au moins un serveur de contenu émet au moins une requête en vue de la fourniture audit terminal, par un serveur de gestion de codes dudit au moins un réseau externe, d'un code destiné à être utilisé ultérieurement afin de recevoir des données appartenant audit domaine de service ;
- le serveur de gestion de codes génère ledit code puis émet une requête en vue de la fourniture du code au terminal, par un serveur d'envoi automatique ;
- le serveur d'envoi automatique émet, via au moins un desdits canaux, au moins un message contenant le code destiné au terminal ;
- ledit au moins un message contenant le code est redirigé vers ledit au moins un équipement intermédiaire qui ouvre ladite session de service ;
   et, au cours de ladite session de service :

- ledit au moins un équipement intermédiaire transmet, via au moins un desdits canaux, ledit au moins un message contenant le code au terminal ;
- ultérieurement, pour recevoir des données appartenant au domaine de service, le terminal fournit ledit code audit au moins un serveur de contenu ;
- ledit au moins un serveur de contenu passe le code au serveur de gestion de codes, qui lui-même le passe à l'équipement intermédiaire ;
- l'équipement intermédiaire détermine si le code est valide ou non, en fonction d'au moins un critère déterminé contenu dans une définition du service appliqué dans ladite session de service, et informe ledit au moins un serveur de contenu, via ledit serveur de gestion de codes, du caractère valide ou non du code.

Avantageusement, au cours d'une même session, ledit au moins un équipement intermédiaire traite au moins deux requêtes successives émises par ledit au moins un terminal et/ou au moins deux messages émis par ledit au moins un serveur de contenu ou ledit serveur d'envoi automatique.

Préférentiellement, ledit au moins un traitement particulier effectué dans le cadre de ladite session de service comprend au moins une des opérations appartenant au groupe comprenant :
- une tarification particulière des données et/ou du temps de connexion audit domaine de service ;
- une notification d'entrée dans ledit domaine de services ;
- une demande de confirmation par le terminal avant l'accès audit domaine de service ;
- une notification de sortie dudit domaine de services ;
- une demande de confirmation par le terminal avant la sortie dudit domaine de service ;
- un contrôle d'autorisation d'accès audit domaine de service ;
- un enrichissement d'une base de données client ;
- une transmission de données ou de message particulier, en fonction d'informations contenues dans une base de données client et/ou dans une requête vers un desdits serveurs ;
- une modification d'une requête vers un desdits serveurs ;
- une modification du flux de données transmis vers le terminal ;
- une action par défaut, lorsqu'on n'accède pas à un desdits domaines de services.

De façon préférentielle, ladite tarification particulière tient compte d'au moins un des aspects suivants :
- un coût fixe par session de service, pour l'accès audit domaine de service ;
- un coût proportionnel au volume de données transmis lors de la session de service ;
- un coût proportionnel à la durée de la session de service ;
- un coût fonction de la date et/ou de l'heure de la session de service ;
- un coût fonction de l'identité de l'utilisateur du terminal ;
- un coût fonction du mode d'accès.

Avantageusement, ledit au moins un domaine de service figure sous la forme d'une table de description accessible par ledit au moins un équipement intermédiaire.

Préférentiellement, les données gérées par ledit au moins un serveur de contenu étant stockées dans un système de fichiers présentent une structure hiérarchique, et chaque domaine de service est représenté, dans ladite table de description, par la notation compacte d'un ou plusieurs sous-cônes de ladite structure hiérarchique.

De façon préférentielle, ledit procédé comprend une étape de clôture d'une session de service courante, effectuée lorsqu'au moins une condition de fin de session est vérifiée.

Préférentiellement, ladite au moins une condition de fin de session de service appartient au groupe comprenant :
- détection d'une requête d'accès par le terminal à des données non comprises dans le domaine de service pour lequel la session de service courante est ouverte ;
- détection d'une requête spécifique, dite de fin de session de service, émise par le terminal ;
- détection du dépassement d'une période maximale d'inactivité du terminal au cours de la session de service courante.

Avantageusement, lorsqu'il communique avec ledit au moins un serveur de contenu, au cours de ladite session de service, ledit au moins un équipement intermédiaire utilise un identifiant opaque du terminal, de façon à masquer audit au moins un serveur de contenu un identifiant réel du terminal.

De façon avantageuse, lorsqu'il communique avec ledit au moins un serveur de contenu, au cours de ladite session de service, ledit au moins un équipement intermédiaire utilise un identifiant de session.

L'identifiant de session de service vise notamment à permettre de faciliter les procédures d'arbitrage pour les montants de reversement liés au service fourni par un fournisseur de contenu via un opérateur. Pour cela, il faut en effet que les fichiers de connexions (« logs ») de part et d'autre aient des identifiants communs. Or, l'heure n'est pas une référence absolue et le numéro MSISDN peut être masqué. L'identifiant de session permet lui rapidement d'identifier une transaction dans les deux systèmes.

Avantageusement, ledit au moins un équipement intermédiaire gère une fonction de réservation de crédits pouvant être partagés par plusieurs sessions de service relatives à un même utilisateur et se déroulant au moins en partie simultanément.

L'invention concerne également un système de gestion de la fourniture, à au moins un terminal d'au moins un réseau de communication, de données gérées par au moins un serveur de contenu d'au moins un réseau externe. Ledit au moins un terminal peut demander et/ou recevoir lesdites données via au moins deux canaux de fourniture de données entre ledit au moins un terminal et ledit au moins un serveur de contenu. Selon l'invention, ledit système comprend :
- des moyens de définition d'au moins un domaine de service, correspondant à au moins une portion des données d'au moins un desdits serveurs ;
- des moyens de détection de la fourniture audit au moins un terminal de données appartenant audit domaine de service ;
- des moyens de gestion de sessions de service, permettant de gérer au moins une session de service, au cours de laquelle est utilisé au moins un desdits canaux, lorsque lesdits moyens de détection détectent la fourniture audit au moins un terminal de données appartenant audit domaine de service ; au moins un traitement particulier étant effectué dans le cadre de ladite session de service.

En outre, lesdits moyens de gestion de sessions de service sont compris dans au moins un équipement intermédiaire traversé par lesdits au moins deux canaux et participant à la liaison entre ledit au moins un réseau de communication et ledit au moins un réseau externe.

Avantageusement, lesdits moyens de gestion de sessions de service comprennent :
- des moyens de contrôle de service, permettant de maintenir les sessions de service en fonction d'une part d'une définition déterminée d'un service associé à chaque domaine de service et d'autre part d'évènements qui sont communiqués auxdits moyens de contrôle de service par au moins un moyen d'interfaçage ;
- pour chaque canal de fourniture de données, un moyen d'interfaçage spécifique (proxy WAP, proxy SMS, ...) permettant de communiquer auxdits moyens de contrôle de service des évènements relatifs aux sessions de service et circulant sur ledit canal, et de recevoir de la part desdits moyens de contrôle de service des instructions relatives à l'envoi d'informations aux terminaux et/ou aux serveurs de contenu.

Préférentiellement, lesdits moyens de contrôle de service communiquent avec au moins un système de facturation, de façon à obtenir pour chaque session de service des informations de facturation et/ou valorisation et/ou autorisation dans le cas d'un mécanisme de pré-paiement.

De façon préférentielle, un seul desdits moyens d'interfaçage, dit moyen d'interfaçage principal, comprend des moyens de communication directe avec lesdits moyens de contrôle de service. En outre, chacun des autres moyens d'interfaçage, dit moyen d'interfaçage secondaire, comprend des moyens de communication indirecte avec lesdits moyens de contrôle de service, via ledit moyen d'interfaçage principal.

Préférentiellement, ledit moyen d'interfaçage principal est commun à un canal de type WAP et à un canal de type WEB (proxy WAP/WEB).

L'invention concerne aussi un équipement intermédiaire comprenant des moyens pour mettre en oeuvre le procédé possédant les caractéristiques ci-dessus.

Préférentiellement, l'équipement intermédiaire est du type compris dans un système de gestion de la fourniture, à au moins un terminal d'au moins un réseau de communication, de données gérées par au moins un serveur de contenu d'au moins un réseau externe. Ledit au moins un terminal peut demander et/ou recevoir lesdites données via au moins deux canaux de fourniture de données entre ledit au moins un terminal et ledit au moins un serveur de contenu. Le système comprend : des moyens de définition d'au moins un domaine de service, correspondant à au moins une portion des données d'au moins un desdits serveurs ; des moyens de détection de la fourniture audit au moins un terminal de données appartenant audit domaine de service. Selon l'invention, l'équipement intermédiaire est traversé par lesdits au moins deux canaux et participe à la liaison entre ledit au moins un réseau de communication et ledit au moins un réseau externe. En outre, l'équipement intermédiaire comprend des moyens de gestion de sessions de service, permettant de gérer au moins une session de service, au cours de laquelle est utilisé au moins un des canaux, lorsque les moyens de détection détectent la fourniture audit au moins un terminal de données appartenant au domaine de service ; au moins un traitement particulier étant effectué dans le cadre de ladite session de service.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un synoptique d'un exemple de système selon l'invention ;
- les figures 2, 3 et 4 illustrent trois exemples d'application du procédé selon l'invention pour la réalisation d'un service d'envoi de SMS, avec respectivement :
   * une session de service simple avec réception d'un seul SMS (figure 2),
   * une session de service simple avec réception de plusieurs SMS (figure 3) et
   * une session de service chaînant plusieurs itérations et avec réception de plusieurs SMS lors de chaque itération (figure 4) ;
- la figure 5 illustre un exemple de session de service, selon le procédé de l'invention, de type monocanal (SMS) en mode « pull » et sans avis de facturation ;
- les figures 6 et 7 illustrent un exemple de session de service, selon le procédé de l'invention, de type monocanal (SMS) en mode « pull » et avec avis de facturation ;
- les figures 8 et 9 illustrent un exemple de session de service, selon le procédé de l'invention, de type monocanal (SMS) en mode « push » et avec utilisation du numéro MSISDN du terminal ;
- les figures 10 et 11 illustrent un exemple de session de service, selon le procédé de l'invention, de type multicanal (WAP et SMS) en mode « pull » ;
- les figures 12 et 13 illustrent un exemple de mécanisme de commerce électronique avec utilisation d'un code, ce mécanisme comprenant une session de service, selon le procédé de l'invention, de type monocanal (SMS) en mode « push » ;
- la figure 14 illustre un exemple de mécanisme de service « pair à pair » (« peer to peer ») permettant de modifier et/ou compléter des messages, ce mécanisme comprenant une session de service, selon le procédé de l'invention, de type monocanal (MMS) ;
- la figure 15 présente un exemple de structure d'une base d'informations d'un serveur de contenu, permettant d'illustrer la notion de domaine de service.

L'invention concerne donc un système et un procédé de gestion de la fourniture, à au moins un terminal d'au moins un réseau de communication, de données gérées par au moins un serveur de contenu d'au moins un réseau externe. On rappelle que la présente invention propose de définir des domaines de service et de gérer des sessions de service.

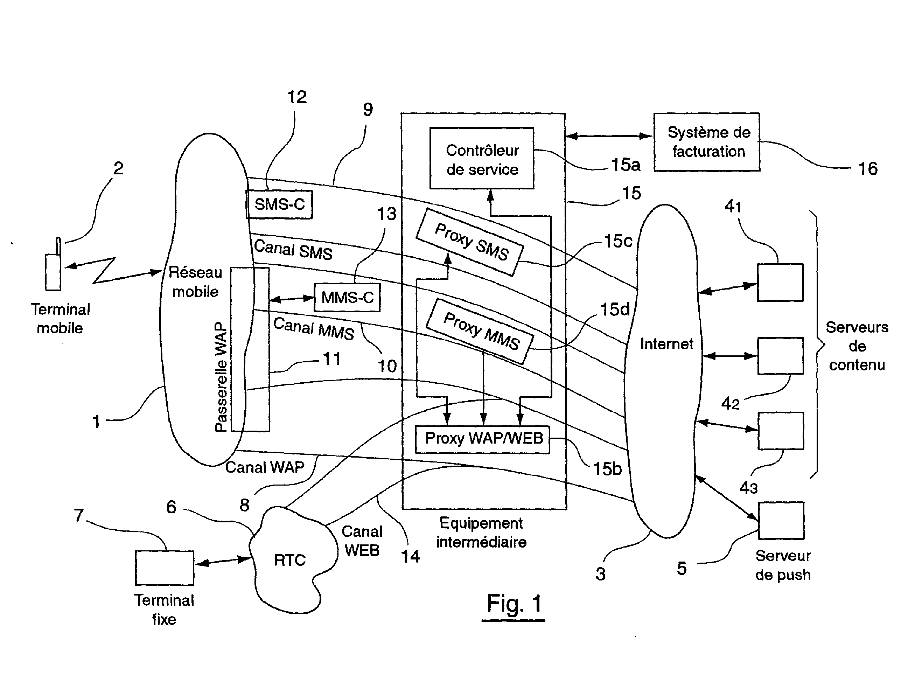

On présente maintenant, en relation avec le synoptique de la **figure 1,** un exemple de système selon l'invention. Dans cet exemple simplifié, le système comprend :
- un réseau de radiocommunication (« réseau mobile ») 1 auquel est relié un terminal mobile 2 ;
- le réseau Internet 3 (formant réseau externe) auquel sont reliés des serveurs de contenu (serveurs WEB) 4₁ à 4₃, et un serveur d'envoi automatique (« serveur de push ») 5 ;
- un réseau fixe 6 (par exemple le réseau téléphonique commuté RTC) auquel est relié un terminal fixe 7.

Le terminal mobile 2 peut demander et/ou recevoir des données gérées par les serveurs de contenu 4₁ à 4₃, via les canaux suivants :
- un canal WAP (« Wireless Application Protocol ») 8, incluant une passerelle WAP 11 (dont le rôle a été rappelé ci-dessus) ;
- un canal SMS (« Short Message service ») 9, incluant un centre de gestion des SMS (SMS-C) 12 (dont le rôle a été rappelé ci-dessus) ;
- un canal MMS (« Multimedia Message service ») 10, incluant la passerelle WAP 11 précitée et un centre de gestion des MMS (MMS-C) 13 (équivalent du SMS-C pour les MMS).

Le terminal fixe 7 peut demander et/ou recevoir des données gérées par les serveurs de contenu 4₁ à 4₃, via un canal WEB 14.

Les canaux précités, de type WAP, SMS et MMS respectivement, sont bien connus de l'homme du métier. Ils ne seront pas décrits plus en détail dans la présente description.

Il convient de noter que dans sa nouvelle version 2.0, le protocole WAP reprend l'essentiel des fonctions du WEB (pas de passage par une passerelle WAP) et que dans ce cas, pour l'opérateur, il n'y a pas de distinction entre une requête WEB par le terminal fixe 7 et une requête WAP par le terminal mobile 2.

Il est clair par ailleurs que d'autres types de canaux, notamment de type EMS (« Enhanced Message service ») ou SVI (« Service Vocal Interactif »), peuvent également être envisagés sans sortir du cadre de la présente invention.

Selon l'invention, on définit au moins un domaine de service, associé à un service donné.

Dans l'exemple de système présenté ci-dessus, chaque domaine de service correspond à une partie ou à la totalité des données d'un ou de plusieurs sites WEB hébergés par les serveurs de contenu 4₁ à 4₃. Ces données sont regroupées en une ou plusieurs pages, associées chacune à une adresse URL.

Le système selon l'invention comprend en outre des moyens de détection de la fourniture au terminal mobile 2 de données appartenant au domaine de service. Cette détection peut s'effectuer par analyse des requêtes émises par le terminal mobile 2 et/ou des données qui lui sont transmises. Les moyens (non représentés) de détection sont par exemple distribués au sein d'une pluralité de machines (par exemple des commutateurs de niveau 7) de l'infrastructure d'interface entre le réseau de radiocommunication 1 et le réseau Internet 3. Typiquement, cette infrastructure d'interface est gérée par l'opérateur du réseau de radiocommunication 1.

Lorsque les moyens de détection détectent que des données du domaine de service doivent être fournies au terminal mobile 2 (soit à sa demande (mode « pull ») soit à l'initiative du fournisseur de contenu (mode « push »)), le trafic correspondant (requêtes, réponses, notifications, ...) est redirigé vers un équipement intermédiaire 15 (décrit en détail ci-après) qui va gérer une session de service.

Le système selon l'invention comprend également un équipement intermédiaire 15 qui est traversé par les canaux WAP 8, SMS 9 et MMS 10 et qui participe à la liaison entre le réseau de radiocommunication 1 et le réseau Internet 3. Cet équipement intermédiaire 15 comprend des moyens de gestion de sessions de service au cours de chacune desquelles est utilisé au moins un des canaux 8, 9, 10, selon la définition du service associé au domaine de service concerné. Au moins un traitement particulier est effectué dans le cadre de chaque session de service, également selon la définition du service associé au domaine de service concerné et aussi selon les évènements (notamment du fait de l'utilisateur du terminal mobile 2) se produisant au cours de cette session.

Le contrôleur de service 15a communique avec un système de facturation 16, de façon à obtenir pour chaque session de service des informations de facturation et/ou valorisation et/ou autorisation dans le cas d'un mécanisme de pré-paiement.

Dans un mode de réalisation particulier de l'équipement intermédiaire 15, illustré sur la figure 1, les moyens de gestion de sessions de service comprennent :
- des moyens 15a de contrôle de service (aussi appelés « contrôleur de service »), permettant de maintenir les sessions de service en fonction d'une part d'une définition déterminée d'un service associé à chaque domaine de service et d'autre part d'évènements qui sont communiqués à ces moyens de contrôle de service par un ou plusieurs des moyens d'interfaçage listés ci-après ;
- un moyen 15b d'interfaçage principal, aussi appelé « proxy WAP/WEB », qui est commun aux canaux WAP 8 et WEB 14 ;
- un premier moyen 15c d'interfaçage secondaire, aussi appelé « proxy SMS », qui est spécifique au seul canal SMS 9 ;
- un second moyen 15d d'interfaçage secondaire, aussi appelé « proxy MMS », qui est spécifique au seul canal MMS 10.

Chacun des moyens d'interfaçage, principal 15b ou secondaire 15c, 15d, permet de communiquer aux moyens 15a de contrôle de service des évènements (requêtes, réponses, notifications) relatifs à une session de service donnée et circulant sur le canal concerné (canal WAP 8, SMS 9 ou MMS 10 respectivement), et inversement de recevoir de la part de ces moyens 15a de contrôle de service des instructions relatives à l'envoi d'informations au terminal mobile 2 et/ou aux serveurs de contenu 4, à 4₃.

On notera que dans ce mode de réalisation particulier, seul le moyen d'interfaçage principal (« proxy WAP/WEB ») 15b comprend des moyens de communication directe avec le contrôleur de service 15a. Chacun des moyens d'interfaçage secondaire 15c (« proxy SMS ») et 15d (« proxy MMS ») comprend des moyens de communication indirecte avec le contrôleur de service 15a, via le moyen d'interfaçage principal 15b.

Ainsi, tous les évènements relatifs aux données des domaines de service, qui passent par les canaux SMS 8 et MMS 10 sont convertis par le « proxy WAP/WEB » 15b au format HTTP (« Hyper Text Transfer Protocol »), sous forme de requêtes/réponses, pour être transmis au contrôleur de service 15a.

Inversement, pour les éléments (requêtes/réponses) au format HTTP que le contrôleur de service 15a souhaite transmettre au terminal mobile 2 :
- soit ces éléments sont convertis par le « proxy WAP/WEB » 15b au format SMS ou MMS respectivement, puis transmis via le « proxy SMS » 15c ou le « proxy MMS » 15d ;
- soit le « proxy WAP/WEB » 15b envoie une requête contenant ces éléments au « proxy SMS » 15c ou au « proxy MMS » 15d, pour que celui-ci la formate en un message SMS ou MMS respectivement. La requête elle-même peut être du XML sur HTTP, donc ce n'est pas nécessairement le « proxy WAP/WEB » 15b qui effectue le formatage, mais éventuellement la machine qui lui donne accès au canal SMS ou MMS (c'est-à-dire au type de message que ces machines supportent dans leurs interfaces publiques).

En d'autres termes, le contrôleur de service 15a ne communique que via le « proxy WAP/WEB » 15b, ce qui permet de réutiliser (entre ces deux entités 15a et 15b) le mécanisme existant de requêtes/réponses HTTP basé sur les adresses URL.

Ceci permet également de centraliser dans le « proxy WAP/WEB » 15b les fonctions d'ouverture et de fermeture des sessions, du fait que tout le trafic (requêtes, réponses, notifications, ...) correspondant à des données des domaines est redirigé vers l'équipement intermédiaire 15 et transite donc par le « proxy WAP/WEB » 15b.

Optionnellement, du fait qu'il connaît toutes les instances de service, l'équipement intermédiaire 15 peut offrir une fonctionnalité inter-service, à savoir une fonctionnalité de réservation de crédits partagés par plusieurs sessions de service relatives à un même utilisateur et se déroulant au moins en partie simultanément. On se place par exemple dans un contexte où, pour chaque service, il convient lors de l'ouverture d'une session de ce service de réserver des crédits dans un compte prépayé de l'utilisateur. Ensuite, en fin de session, une partie des crédits est restituée si la quantité réservée était supérieure à la quantité de crédits réellement due. Si plusieurs sessions relatives à des services différents sont ouvertes pour un même utilisateur, la fonctionnalité de réservation de crédits selon l'invention permet d'optimiser (en la réduisant) la quantité de crédits réservés, en tenant compte notamment du nombre de sessions ouvertes simultanément, des habitudes de l'utilisateur, voire en modifiant de façon dynamique la quantité de crédits réservés et/ou en informant l'utilisateur que son compte est trop bas pour tel ou tel service.

L'équipement intermédiaire 15 est par exemple compris dans une machine (formant « passerelle » ou « proxy ») de l'infrastructure d'interface entre le réseau de radiocommunication 1 et le réseau Internet 3. Une telle machine présente l'avantage de permettre une mesure, et éventuellement une modification, à la volée du flux de données qui la traverse. Il est bien sûr également possible de mesurer ce flux à l'aide d'une ou plusieurs sondes, qui renseigne(nt) la machine. Dans le cas d'Internet, les mesures de trafic se font au niveau IP, à l'extérieur du réseau de radiocommunication 1 de l'opérateur.

L'opérateur du réseau de radiocommunication 1 peut être amené à effectuer plusieurs actions (aussi appelées « traitements particuliers ») dans le cadre de chaque session de service. Ces actions, gérées par le contrôleur de service 15a, sont fonction de la définition du service associé au domaine de service concerné, ainsi que des évènements (notamment du fait de l'utilisateur du terminal mobile 2) se produisant au cours de la session de service concernée.

Une première action consiste à observer (mesure du flux et/ou du temps de connexion correspondant, grâce à l'équipement intermédiaire 15 et/ou à des sondes associées) la navigation du terminal mobile 2 au sein du réseau Internet et notifier à ce terminal le fait qu'il entre dans un domaine de service identifié. Ainsi, il est désormais possible de réaliser un « kiosque de données de service », où par exemple la tarification est fonction du service demandé. On peut aussi demander à l'utilisateur du terminal de confirmer qu'il désire effectivement pénétrer dans ce domaine de service. Il est également possible d'associer des actions par défaut dans le cas où le terminal n'accède pas à un domaine de service et se trouve donc en dehors des domaines de services observés par l'opérateur.

Une deuxième action consiste à modifier, grâce à l'équipement intermédiaire 15, une requête émise par le terminal (notamment dans le mode « pull ») et/ou une requête (ou une réponse ou une notification) émise par un serveur de contenu ou un serveur d'envoi automatique (notamment dans le mode « push »). Cette modification consiste par exemple à modifier les paramètres de l'en-tête de la requête ou à adjoindre de nouveaux paramètres à cette requête. L'opérateur peut ainsi transmettre des données spécifiques au destinataire de la requête (serveur ou terminal selon le cas).

Une troisième action consiste à enregistrer dans une base de données l'accès du terminal au domaine de service concerné. La connaissance de cet accès peut être utilisée ultérieurement afin de cerner le profil du terminal (meilleure connaissance des clients). Elle peut également être exploitée pour diffuser sélectivement (et dynamiquement ou ultérieurement) des annonces publicitaires au terminal.

Une quatrième action consiste à réaliser un certain nombre de contrôles avant de demander au terminal la confirmation de l'accès au domaine de service. Il peut s'agir entre autres d'un contrôle d'accès pour vérifier que le terminal est habilité, d'un contrôle parental autorisant l'accès à ce domaine ou d'un contrôle relatif à l'état du compte client.

Une cinquième action consiste à notifier à l'utilisateur du terminal le fait qu'il sort du domaine de service. Il est également possible de demander à l'utilisateur de confirmer qu'il souhaite sortir du domaine de service.

Une sixième action consiste à facturer le terminal en fonction du service demandé. En sus de la prise en compte du domaine de service concerné pour définir le tarif applicable, l'opérateur peut envisager une facture comportant une partie transactionnelle (un montant fixe correspondant à l'accès au service) et une partie proportionnelle à la quantité de données transmises et /ou au temps passé dans le cadre du service.

D'autres paramètres peuvent être pris en compte pour la facturation, et notamment un coût fonction de la date et/ou l'heure de la session de service, l'identité de l'utilisateur du terminal, le mode d'accès, etc.

A la réception d'un premier message relatif à un domaine de service (requête du terminal ou message d'un serveur), l'équipement intermédiaire 15 ouvre une session de service ayant pour attributs le terminal et le domaine de service concerné, avant d'entreprendre éventuellement l'une ou l'autre des actions mentionnées plus haut.

Naturellement, à la réception d'un quelconque autre message, l'équipement intermédiaire 15 vérifie si une session de service est déjà ouverte pour éviter d'en ouvrir une nouvelle comportant les mêmes attributs. Le message est ensuite transmis à son destinataire.

On notera qu'au cours d'une même session, l'équipement intermédiaire 15 peut traiter plusieurs requêtes successives, émises par le terminal (mobile 2 ou fixe 7), et/ou plusieurs messages, émis par l'un des serveurs (de contenu 4₁ à 4₃ ou d'envoi automatique 5).

Il est également prévu, dans la présente invention, une étape de clôture d'une session de service courante. Cette étape de clôture est effectuée lorsqu'au moins une condition de fin de session est vérifiée.

Une première condition de fin de session est la détection d'une requête d'accès par le terminal à des données non comprises dans le domaine de service pour lequel la session de service courante est ouverte.

Une seconde condition de fin de session est la détection d'une requête spécifique, dite de fin de session de service, émise par le terminal.

Une troisième condition de fin de session est la détection du dépassement d'une période maximale d'inactivité du terminal au cours de la session de service courante.

On présente ci-après plusieurs exemples de session de service selon le procédé de l'invention.

D'une façon générale, on peut distinguer les sessions de service « monocanal », au cours desquelles un seul canal est utilisé, des sessions de service « multicanal », au cours desquelles plusieurs canaux sont utilisés.

Dans la seconde catégorie, on peut citer, uniquement à titre d'exemple et sans caractère exhaustif :
- un service dans lequel le terminal mobile émet une requête sur le canal WAP, et reçoit en retour une ou plusieurs réponses sur le canal SMS et/ou le canal MMS et/ou le canal EMS ;
- un service dans lequel le terminal mobile émet une requête sur le canal SMS, et reçoit en retour une ou plusieurs réponses sur le canal WAP et/ou le canal MMS ;
- un service dans lequel le terminal mobile émet successivement plusieurs requêtes sur le canal SMS, et reçoit en retour, pour chaque requête SMS, une ou plusieurs réponses sur le même canal SMS ;
- un service dans lequel le terminal mobile émet successivement plusieurs requêtes sur le canal MMS, et reçoit en retour, pour chaque requête, une ou plusieurs réponses sur le même canal MMS ;
- un service dans lequel le terminal fixe émet une requête sur le canal WEB, et le terminal mobile reçoit en retour une ou plusieurs réponses sur le canal WAP et/ou le canal SMS et/ou le canal MMS et/ou le canal EMS ;
- etc.

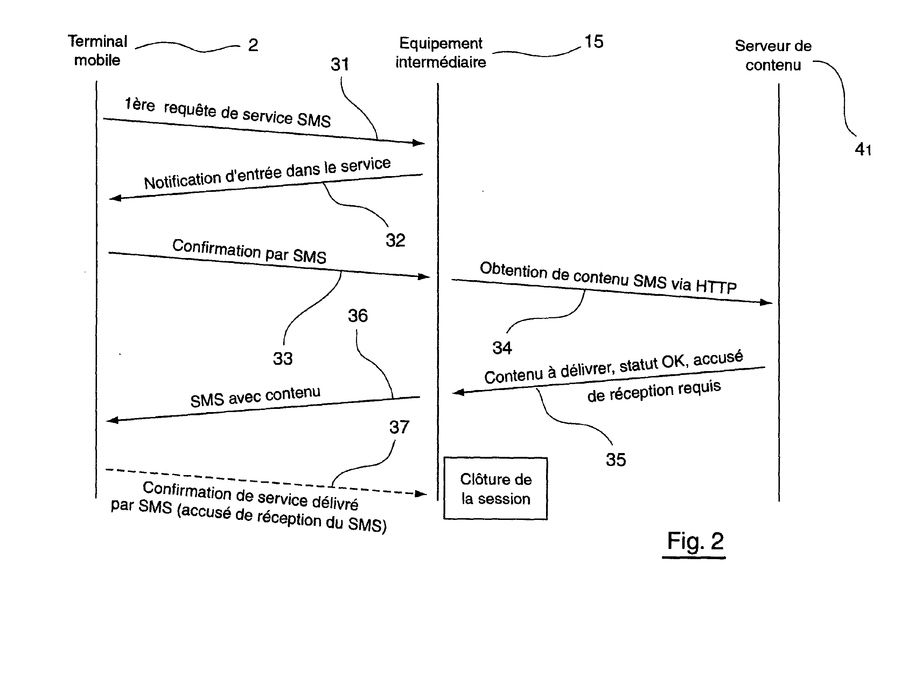

On présente maintenant, en relation avec les figures 2 à 4, trois exemples d'application du procédé selon l'invention pour la réalisation d'un service d'envoi de SMS.

Dans le premier exemple d'application, illustré sur la **figure 2,** l'équipement intermédiaire 15 gère une session de service « simple », avec réception d'un seul SMS par le terminal mobile 2. L'utilisateur du terminal mobile sélectionne un service et émet une première requête de service SMS 31 comportant le numéro court de ce service. A la réception de cette première requête 31, l'équipement intermédiaire 15 ouvre une session et envoie au terminal mobile 2 une notification 32 (basée sur un SMS) l'informant de son entrée dans le service et l'invitant à confirmer qu'il accepte d'être facturé pour ce service. Si le terminal mobile 2 envoie un SMS de confirmation 33, l'équipement intermédiaire 15 se procure le contenu demandé (qui appartient au domaine de service associé au service précité) auprès du serveur de contenu 4₁ (par exemple en émettant une requête HTTP 34 et en recevant une réponse correspondante 35). Puis l'équipement intermédiaire 15 transmet cette réponse (avec le contenu demandé) au terminal mobile, dans un unique SMS 36. Après que le terminal mobile a retourné un accusé de réception 37, l'équipement intermédiaire 15 clôture la session, puisqu'il sait que ce service implique l'envoi de contenu au terminal mobile via un seul SMS.

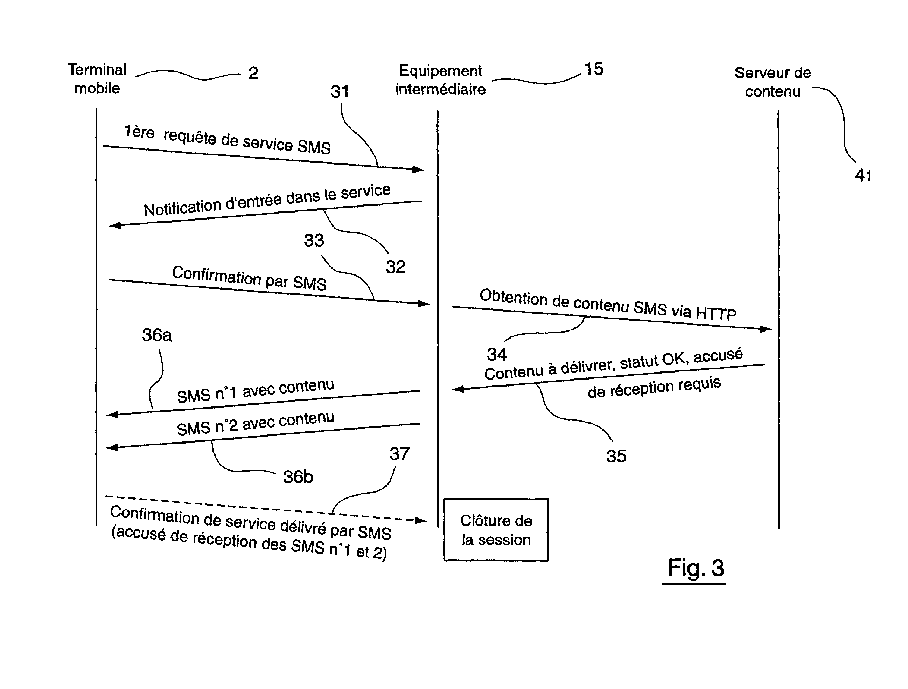

Dans le second exemple d'application, illustré sur la **figure 3,** l'équipement intermédiaire 15 gère une session de service « simple », avec réception de plusieurs SMS par le terminal mobile 2. Les éléments référencés 31 à 35 et 37 sur la figure 2 et qui apparaissent également sur la figure 3 conservent les mêmes références. Ce second exemple se distingue du premier uniquement en ce que l'équipement intermédiaire 15 transmet le contenu demandé au terminal mobile dans plusieurs SMS 36a, 36b (et non pas dans un unique SMS 36). Par ailleurs, après que le terminal mobile a retourné un accusé de réception 37, l'équipement intermédiaire 15 clôture la session, puisqu'il sait que ce service implique l'envoi de contenu au terminal mobile via plusieurs SMS.

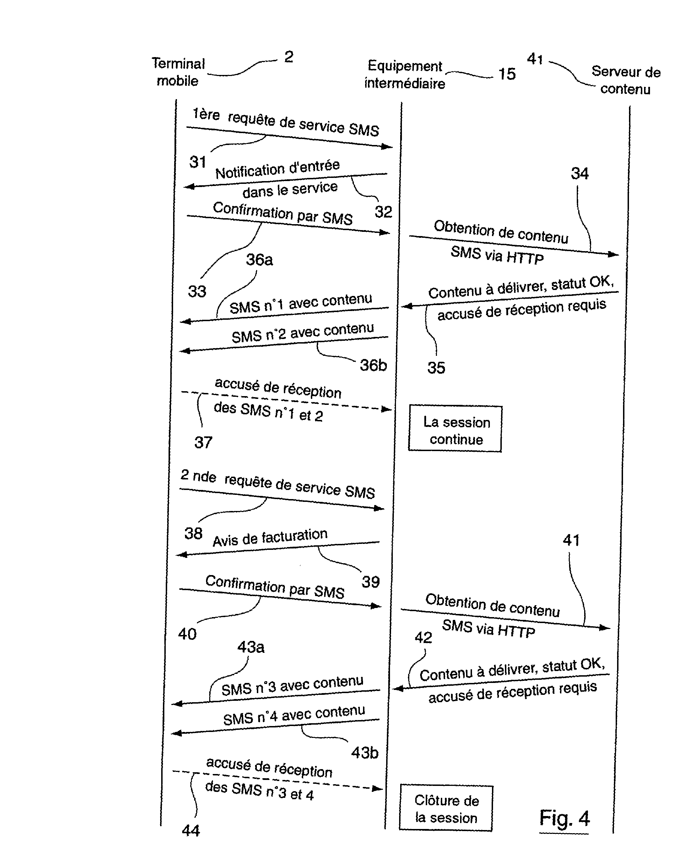

Dans le troisième exemple d'application, illustré sur la **figure 4,** l'équipement intermédiaire 15 gère une session de service « multiple », chaînant plusieurs itérations et avec réception de plusieurs SMS par le terminal mobile 2 lors de chaque itération. La première itération est dans cet exemple identique à ce qui a été décrit ci-dessus en relation avec la figure 3 (les mêmes éléments 31 à 37 conservent les mêmes références numériques). Ici, après que le terminal mobile a retourné un accusé de réception 37, l'équipement intermédiaire 15 ne clôture pas la session. Il sait que ce service implique le traitement de plusieurs (par exemple deux) requêtes de service SMS et attend que le terminal mobile émette une seconde requête de service SMS 38 comportant le même numéro court du service. A la réception de cette seconde requête 38, l'équipement intermédiaire 15 reconnaît qu'elle concerne une session en cours et :
- envoie au terminal mobile 2 un avis de facturation 39 (basé sur un SMS) l'invitant à confirmer qu'il accepte d'être facturé pour la seconde partie du service. On notera que cette étape peut être vue comme optionnelle, avec les deux variantes ci-dessous ;
- dans une première variante, donne accès directement au contenu en gardant la session ouverte ;
- dans une seconde variante, envoie un message de notification reportant une situation particulière conduisant à la fermeture de la session (par exemple si le crédit de l'utilisateur est épuisé).

Si le terminal mobile 2 envoie un SMS de confirmation 40 (ou directement dans le cas de la première variante précitée), l'équipement intermédiaire 15 se procure le contenu demandé (qui appartient au domaine de service associé au service précité) auprès du serveur de contenu 4₁ (par exemple en émettant une requête HTTP 41 et en recevant une réponse correspondante 42). Puis l'équipement intermédiaire 15 transmet cette réponse (avec le contenu demandé) au terminal mobile, dans plusieurs SMS 43a, 43b. Après que le terminal mobile a retourné un accusé de réception 44, l'équipement intermédiaire 15 clôture la session, puisqu'il sait que toutes les requêtes possibles de ce service ont été traitées.

On présente désormais, en relation avec la **figure 5,** un exemple de session de service, selon le procédé de l'invention, de type monocanal (SMS) en mode « pull » et sans avis de facturation.

Les éléments impliqués dans cet exemple ont déjà été discutés en détail ci-dessus, en relation avec la figure 1, à savoir : le terminal mobile 2, l'un des serveurs de contenu 4₁ et l'équipement intermédiaire 15 (comprenant notamment le contrôleur de service 15a et le « proxy SMS » 15c). Dans un souci de simplification, on n'a pas représenté le « proxy WAP/WEB » 15b, qui se trouve (voir figure 1) d'une part à l'interface entre le « proxy SMS » 15c et le contrôleur de service 15a, et d'autre part entre le contrôleur de service 15a et le serveur de contenu 4₁. Par ailleurs, on suppose ici que le « proxy SMS » 15c comprend un module d'émission de SMS 20 (qui communique avec le terminal mobile 2 via le SMS-C (non représenté)) et un module de conversion HTTP/SMS 21.

On décrit ci-après les étapes successives, référencées 51 à 510.

Etape 51 : afin de recevoir des données spécifiques (par exemple des données météorologiques ou une sonnerie), le terminal mobile 2 envoie un SMS (de type MO-SMS, pour « Mobile Originated SMS ») via UCP/SMPP, avec en paramètres le numéro court (« shortno ») du service et un texte (« text »). Classiquement, ce numéro court est connu de l'utilisateur grâce aux publicités.

Etapes 52 et 53 : le SMS émis par le terminal mobile 2 est redirigé vers le « proxy SMS » 15c. Dans ce dernier, le module d'émission de SMS 20 reçoit le SMS et le transmet (par requêtes internes : « SendSMSReq » et « SendSMSAck ») au module de conversion HTTP/SMS 21, avec en paramètres ceux précités (numéro court du service et texte) ainsi que le numéro MSISDN du terminal mobile 2.

Etape 54 : le module de conversion HTTP/SMS 21 convertit le SMS émis par le terminal mobile 2 en une requête HTTP qu'il transmet au contrôleur de service 15a. Il s'agit d'une requête HTTP vers une adresse URL correspondant, selon une table prédéterminée, au numéro court du service. Cette requête HTTP possède comme paramètres le texte précité et le numéro MSISDN du terminal mobile 2.

Etape 55 : le contrôleur de service 15a gère une session du service demandé par l'utilisateur. Il gère par exemple les aspects de facturation en relation avec le système de facturation (non représenté). Il émet une requête HTTP vers le serveur de contenu 4₁, en remplaçant, dans les paramètres, le numéro MSISDN du terminal mobile 2 par un identifiant opaque (« OpaqueID »). Il ajoute également un paramètre (« TID ») identifiant de manière unique la session de service (transaction en cours), pour des opérations ultérieures de corrélation.

Etape 56 : le serveur de contenu 4₁ fournit au contrôleur de service 15a une réponse contenant les données demandées par l'utilisateur (« SMS info »).

Etape 57 : le contrôleur de service 15a transmet cette réponse au module de conversion HTTP/SMS 21.

Etapes 58 et 59 : le module de conversion HTTP/SMS 21 convertit la réponse au format SMS et la transmet (par requêtes internes : « GotSMSReq » et « GotSMSAck ») au module d'émission de SMS 20.

Etape 510 : le module d'émission de SMS 20 transmet la réponse au format SMS au terminal mobile 2, via UCP/SMPP.

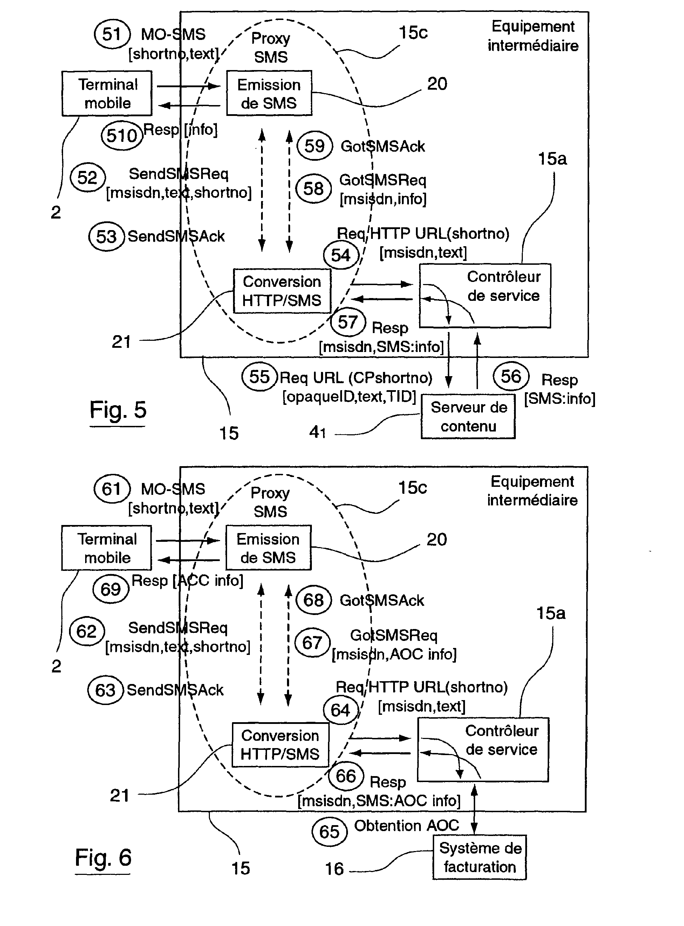

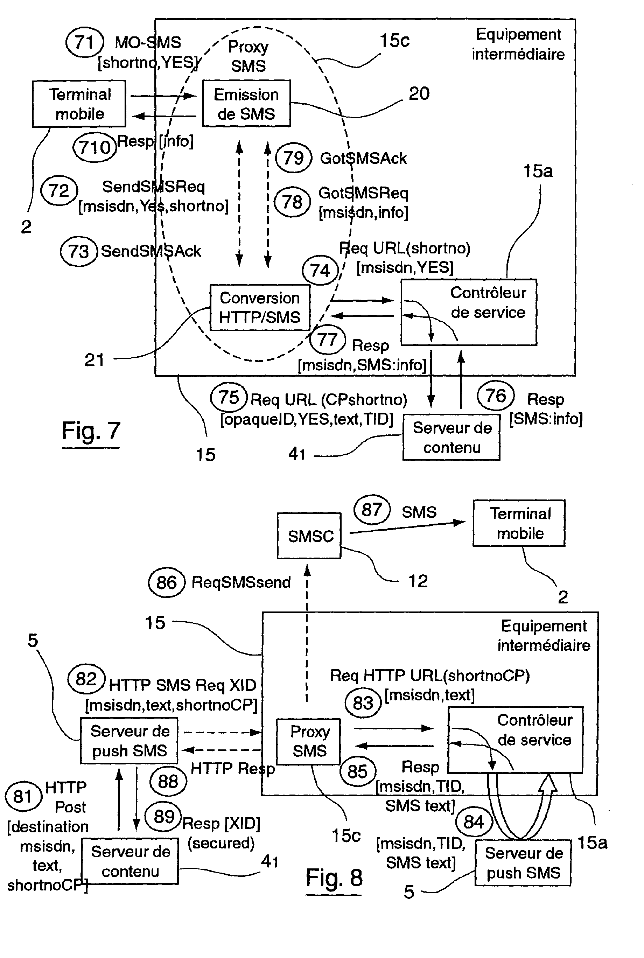

On présente maintenant, en relation avec les **figures 6 et 7,** un exemple de session de service, selon le procédé de l'invention, de type monocanal (SMS) en mode « pull » et avec avis de facturation.

On distingue une première phase de génération d'un avis de facturation (étapes référencées 61 à 69, décrites ci-après en relation avec la figure 6) et une seconde phase d'acceptation par l'utilisateur (étapes référencées 71 à 710, décrites ci-après en relation avec la figure 7).

L'équipement intermédiaire 15, qui gère la session de service, peut affecter une durée de validité prédéterminée à l'avis de facturation, de sorte que si l'utilisateur donne son accord après écoulement de cette durée de validité, l'accès au service lui sera refusé (il recevra par exemple un message d'erreur par SMS).

Etape 61 : afin de recevoir des données spécifiques, le terminal mobile 2 envoie un premier SMS, avec en paramètres le numéro court (« shortno ») du service et un texte (« text »).

Etapes 62 et 63 : le premier SMS émis par le terminal mobile 2 est redirigé vers le « proxy SMS » 15c. Dans ce dernier, le module d'émission de SMS 20 reçoit le premier SMS et le transmet (par requêtes internes : « SendSMSReq » et « SendSMSAck ») au module de conversion HTTP/SMS 21, avec en paramètres ceux précités (numéro court du service et texte) ainsi que le numéro MSISDN du terminal mobile 2.

Etape 64 : le module de conversion HTTP/SMS 21 convertit le premier SMS émis par le terminal mobile 2 en une requête HTTP qu'il transmet au contrôleur de service 15a. Il s'agit d'une requête HTTP vers une adresse URL correspondant, selon une table prédéterminée, au numéro court du service. Cette requête HTTP possède comme paramètre le texte précité et le numéro MSISDN du terminal mobile 2.

Etape 65 : le contrôleur de service 15a gère une session du service demandé par l'utilisateur. Il sait ce que ce service requiert un avis de facturation (AOC, pour « Advice Of Charge » en anglais), qu'il se procure auprès du système de facturation 16.

On notera que, dans cet exemple, on suppose que le contrôleur de service 15a et le « proxy WAP/WEB » (non représenté) fournissent ensemble la fonction de stockage du texte passé en paramètre de la requête résultant de la conversion du premier SMS émis par le terminal mobile 2. En effet, ce texte doit ensuite (au cours de la seconde phase) être passé en paramètre de la requête HTTP émise vers le serveur de contenu 4₁.

Dans une variante, la fonction de stockage précitée peut être réalisée par le contrôleur de service 15a avec le « proxy SMS » 15c.

Etape 66 : le contrôleur de service 15a transmet cet avis de facturation au module de conversion HTTP/SMS 21.

Etapes 67 et 68 : le module de conversion HTTP/SMS 21 convertit l'avis de facturation au format SMS et le transmet (par requêtes internes : « GotSMSReq » et « GotSMSAck ») au module d'émission de SMS 20.

Etape 69 : le module d'émission de SMS 20 transmet l'avis de facturation au format SMS au terminal mobile 2.

Etape 71 : l'utilisateur accepte d'être facturé pour ce service en répondant au SMS contenant l'avis de facturation qu'il vient de recevoir (voir étape 69 ci-dessus). Le terminal mobile 2 envoie alors un second SMS, avec en paramètres le numéro court (« shortno ») du service et l'accord (« YES »). L'accord est une option qui présente l'intérêt de forcer une confirmation « active » de l'utilisateur, évitant la plupart des conflits pour fausses manoeuvres plus ou moins réelles.

Etapes 72 et 73 : le second SMS émis par le terminal mobile 2 est redirigé vers le « proxy SMS » 15c. Dans ce dernier, le module d'émission de SMS 20 reçoit le second SMS et le transmet (par requêtes internes : « SendSMSReq » et « SendSMSAck ») au module de conversion HTTP/SMS 21, avec en paramètres ceux précités (numéro court du service et accord) ainsi que le numéro MSISDN du terminal mobile 2.

Etape 74 : le module de conversion HTTP/SMS 21 convertit le second SMS émis par le terminal mobile 2 en une requête HTTP qu'il transmet au contrôleur de service 15a. Il s'agit à nouveau d'une requête HTTP vers l'adresse URL correspondant au numéro court du service. Cette requête HTTP possède comme paramètre l'accord précité et le numéro MSISDN du terminal mobile 2.

Etape 75 : le contrôleur de service 15a continue à gérer la session du service demandé par l'utilisateur. Il émet une requête HTTP vers le serveur de contenu 4₁, en remplaçant, dans les paramètres, le numéro MSISDN du terminal mobile 2 par un identifiant opaque (« OpaqueID »). Il ajoute également un paramètre (« TID ») identifiant de manière unique la session de service (transaction en cours), pour des opérations ultérieures de corrélation. Il passe également en paramètre le texte qui lui a préalablement été passé en paramètre de la requête résultant de la conversion du premier SMS émis par le terminal mobile 2 (voir étape 65 ci-dessus).

Etape 76 : le serveur de contenu 4₁ fournit au contrôleur de service 15a une réponse contenant les données demandées par l'utilisateur (« SMS info »).

Etape 77 : le contrôleur de service 15a transmet cette réponse au module de conversion HTTP/SMS 21.

Etapes 78 et 79 : le module de conversion HTTP/SMS 21 convertit la réponse au format SMS et la transmet (par requêtes internes : « GotSMSReq » et « GotSMSAck ») au module d'émission de SMS 20.

Etape 710 : le module d'émission de SMS 20 transmet la réponse au format SMS au terminal mobile 2.

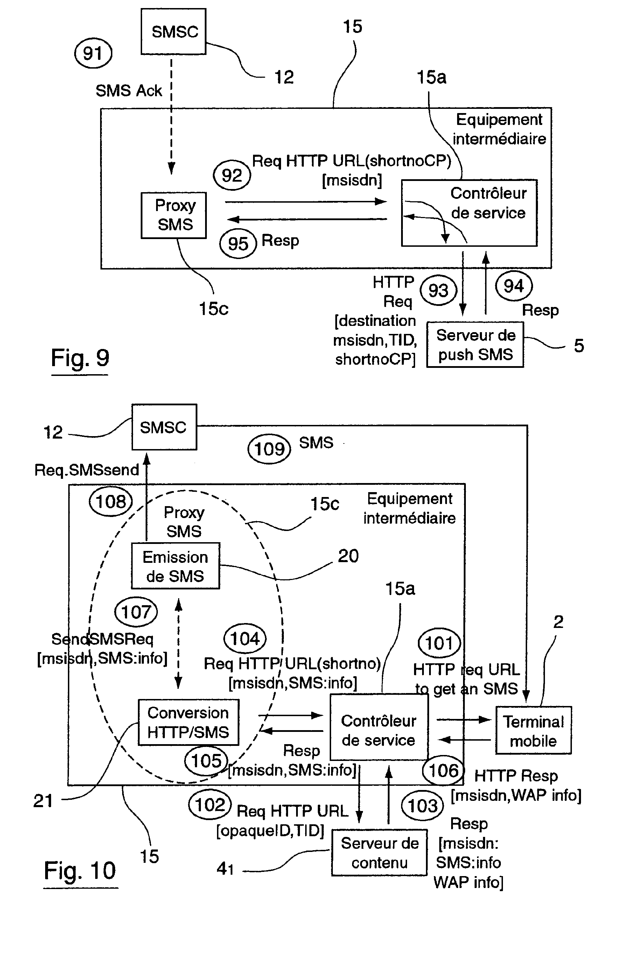

On présente maintenant, en relation avec les **figures 8 et 9,** un exemple de session de service, selon le procédé de l'invention, de type monocanal (SMS) en mode « push » et avec utilisation du numéro MSISDN du terminal.

On distingue une première phase de transmission d'un SMS (étapes référencées 81 à 89, décrites ci-après en relation avec la figure 8) et une seconde phase de gestion de l'accusé de réception de cet SMS (étapes référencées 91 à 95, décrites ci-après en relation avec la figure 9).

Etape 81 : le serveur de contenu 4₁ émet une requête HTTP vers le serveur d'envoi automatique 5, appelé ci-après « serveur de push SMS », afin que ce dernier fournisse au terminal mobile 2, via le SMS-C 12, des données appartenant à un domaine de service. Avec cette requête HTTP, le serveur de contenu 4₁ passe les paramètres suivants : le numéro court (« shortnoCP ») du service, le numéro MSISDN du terminal mobile destinataire 2 et un texte (« text ») correspondant aux données fournies par le serveur de contenu 4, dans le cadre du service.

Etape 82 : le serveur de push SMS 5 émet une requête HTTP destinée au SMS-C 12, avec les paramètres précités (numéro court du service, numéro MSISDN du terminal mobile 2 et texte).

Etape 83 : la requête émise par le serveur de push SMS 5 est redirigée vers le proxy SMS 15c (compris dans l'équipement intermédiaire 15). Ce dernier la convertit en une autre requête HTTP qu'il transmet au contrôleur de service 15a. Il s'agit d'une requête HTTP vers une adresse URL correspondant, selon une table prédéterminée, au numéro court du service. Cette requête HTTP possède comme paramètre le texte précité et le numéro MSISDN du terminal mobile 2.

Etape 84 : le contrôleur de service 15a gère une session du service demandé par le serveur de contenu 4₁. Il gère par exemple les aspects de facturation en relation avec le système de facturation (non représenté). Il peut également définir un paramètre (« TID ») identifiant de manière unique la session de service (transaction en cours), et fournir cet identifiant serveur de push SMS 5 pour des opérations ultérieures de corrélation.

Etape 85 : le contrôleur de service 15a transmet au proxy SMS 15c une requête HTTP destinée au SMS-C 12, avec les paramètres suivants : numéro MSISDN du terminal mobile 2, texte et identifiant (« TID ») de la session de service.

Etape 86 : le proxy SMS 15c convertit la requête HTTP transmise par le contrôleur de service 15a en une requête compréhensible par le SMS-C 12, et l'envoie à ce dernier.

Etape 87 : le SMS-C 12 envoie un SMS, contenant le texte demandé, au terminal mobile 2

Etapes 88 et 89 : via le serveur de push SMS 5, le proxy SMS 15c informe le serveur de contenu 4₁ que le nécessaire a été fait auprès du SMS-C 12 pour l'envoi d'un SMS au terminal mobile 2.

Etape 91 : le SMS-C 12 émet un accusé de réception (« SMS Ack ») du SMS précité (voir étape 87 ci-dessus) par le terminal mobile 2.

Etape 92 : l'accusé de réception émis par le SMS-C 12 est redirigé vers le proxy SMS 15c. Ce dernier le convertit en une requête HTTP qu'il transmet au contrôleur de service 15a. Il s'agit d'une requête HTTP vers l'adresse URL correspondant au numéro court du service. Cette requête HTTP possède comme paramètre le numéro MSISDN du terminal mobile 2.

Etape 93 : le contrôleur de service 15a continue à gérer la session du service demandé par le serveur de contenu 4₁. Il clôture par exemple la session après la réception de l'accusé de réception précité et émet un ticket de facturation (qu'il s'est préalablement procuré auprès du système de facturation). Il peut également émettre une requête HTTP vers le serveur de push SMS 5, afin de l'informer de la réception correcte du SMS par le terminal mobile 2. Il passe en paramètre de cette requête le numéro MSISDN du terminal mobile 2, le numéro court du service ainsi que l'identifiant (« TID ») de la session de service, afin que le serveur de push SMS 5 puisse traiter correctement l'information que le contrôleur de service 15a lui fournit. L'identifiant (« TID ») de la session de service permet de réaliser des corrélations entre les fichiers de connexions (« logs ») des serveurs des fournisseurs de contenu et ceux de l'opérateur. Ceci est important pour gérer des conflits de reversement.

Etapes 94 et 95 : afin de respecter le protocole HTTP, qui impose une réponse à toute requête, le serveur de push SMS 5 envoie une réponse au contrôleur de service 15a, et le contrôleur de service 15a envoie une réponse au proxy SMS 15c.

Dans une variante (non illustrée) de l'exemple discuté ci-dessus en relation avec les figures 8 et 9, le serveur de contenu 4₁ utilise un identifiant opaque du terminal (« OpaqueID ») et le serveur de push SMS 5 assure le remplacement de cet identifiant opaque par le numéro MSISDN du terminal mobile 2.

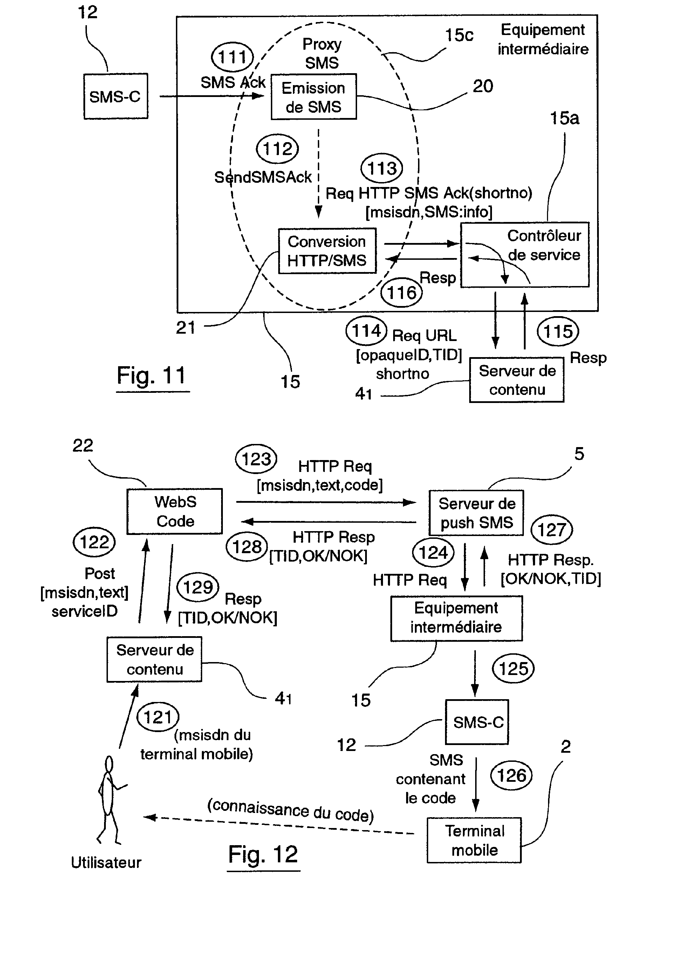

On présente maintenant, en relation avec les **figures 10 et 11,** un exemple de session de service, selon le procédé de l'invention, de type multicanal (WAP et SMS) en mode « pull ».

On distingue une première phase de transmission d'un SMS sur requête WAP (étapes référencées 101 à 109, décrites ci-après en relation avec la figure 10) et une seconde phase de gestion de l'accusé de réception de cet SMS (étapes référencées 111 à 116, décrites ci-après en relation avec la figure 11).

Les éléments impliqués dans cet exemple ont déjà été discutés en détail ci-dessus, en relation avec la figure 1, à savoir : le terminal mobile 2, l'un des serveurs de contenu 4₁, l'équipement intermédiaire 15 (comprenant notamment le contrôleur de service 15a et le « proxy SMS » 15c) et le SMS-C 12.

Dans un souci de simplification, on n'a pas représenté le « proxy WAP/WEB » 15b, qui se trouve (voir figure 1) :
- à l'interface entre le « proxy SMS » 15c et le contrôleur de service 15a,
- à l'interface entre le contrôleur de service 15a et le serveur de contenu 4₁,
- à l'interface entre le terminal mobile 2 et le contrôleur de service 15a.

Il est à noter qu'il se peut que des requêtes ne transitent pas par le contrôleur de service 15a, mais « passent » simplement par le « proxy WAP/WEB » 15b, avec un compte-rendu (« reporting ») vers le contrôleur de service pour indiquer le volume de données qui ont transité à l'aller et au retour d'une tranbsaction donnée, ou bien le nombre de messages SMS générés, ou encore la taille du message MMS envoyé, etc.

Par ailleurs, et de même que précédemment, on suppose que le « proxy SMS » 15c comprend un module d'émission de SMS 20 (qui communique avec le terminal mobile 2 via le SMS-C (non représenté)) et un module de conversion HTTP/SMS 21.

Etape101 : le terminal mobile 2 envoie via le canal WAP une requête HTTP, indiquant qu'il souhaite recevoir des données spécifiques par le canal SMS.

Etape102 : la requête émise par le terminal mobile 2 est redirigée vers le contrôleur de service 15a (via le « proxy WAP/WEB »). Ce dernier gère une session du service demandé par l'utilisateur. Il gère par exemple les aspects de facturation en relation avec le système de facturation (non représenté). Il émet une requête HTTP vers le serveur de contenu 4₁, avec en paramètres un identifiant opaque (« OpaqueID »), masquant le numéro MSISDN du terminal mobile 2, et un identifiant (« TID ») de la session de service.

Etape 103 : le serveur de contenu 4₁ fournit au contrôleur de service 15a une réponse contenant notamment les données demandées par l'utilisateur (« SMS info »), ainsi que des informations (« WAP info ») destinées à être envoyées au navigateur WAP du terminal 2 afin d'y afficher une information telle que « Merci ..., nous vous envoyons par SMS les informations demandées ».

Etape 104 : le contrôleur de service 15a transmet cette réponse au module de conversion HTTP/SMS 21, dans une requête HTTP vers une adresse URL correspondant, selon une table prédéterminée, au numéro court du service. Cette requête HTTP possède comme paramètres les données demandées par l'utilisateur et le numéro MSISDN du terminal mobile 2.

Etapes 105 et 106 : afin de respecter le protocole HTTP, qui impose une réponse à toute requête, le module de conversion HTTP/SMS 21 envoie une réponse au contrôleur de service 15a, et le contrôleur de service 15a envoie une réponse au terminal mobile 2.

Etapes 107 : le module de conversion HTTP/SMS 21 convertit au format SMS la requête HTTP émise par le module de conversion HTTP/SMS 21, et la transmet (par requêtes internes) au module d'émission de SMS 20.

Etape 108 : le module d'émission de SMS 20 transmet la requête au format SMS au SMS-C 12.

Etape 109 : le SMS-C 12 envoie au terminal mobile 2 un SMS contenant les données demandées par l'utilisateur (« SMS info »).

Etape 111 : le SMS-C 12 émet un accusé de réception (« SMS Ack ») du SMS précité (voir étape 109 ci-dessus) par le terminal mobile 2.

Etape 112 : l'accusé de réception émis par le SMS-C 12 est redirigé vers le module d'émission de SMS 20 qui le transmet (par requêtes internes) au module de conversion HTTP/SMS 21.

Etape 113 : le module de conversion HTTP/SMS 21 convertit l'accusé de réception au format SMS en une requête HTTP qu'il transmet au contrôleur de service 15a. Il s'agit d'une requête HTTP vers l'adresse URL correspondant au numéro court du service. Cette requête HTTP possède comme paramètre le numéro MSISDN du terminal mobile 2.

Etape 114 : le contrôleur de service 15a continue à gérer la session du service demandé par le terminal mobile 2. Il clôture par exemple la session après la réception de l'accusé de réception précité et émet un ticket de facturation (qu'il s'est préalablement procuré auprès du système de facturation). Il peut également émettre une requête HTTP vers le serveur de contenu 4₁, afin de l'informer de la réception correcte du SMS par le terminal mobile 2. Il passe en paramètre de cette requête l'identifiant opaque du terminal mobile 2, le numéro court du service ainsi que l'identifiant (« TID ») de la session de service, afin que le serveur de contenu 4₁ puisse traiter correctement l'information que le contrôleur de service 15a lui fournit.

Etapes 115 et 116 : afin de respecter le protocole HTTP, qui impose une réponse à toute requête, le serveur de contenu 4₁ envoie une réponse au contrôleur de service 15a, et le contrôleur de service 15a envoie une réponse au module de conversion HTTP/SMS 21 compris dans le proxy SMS 15c.

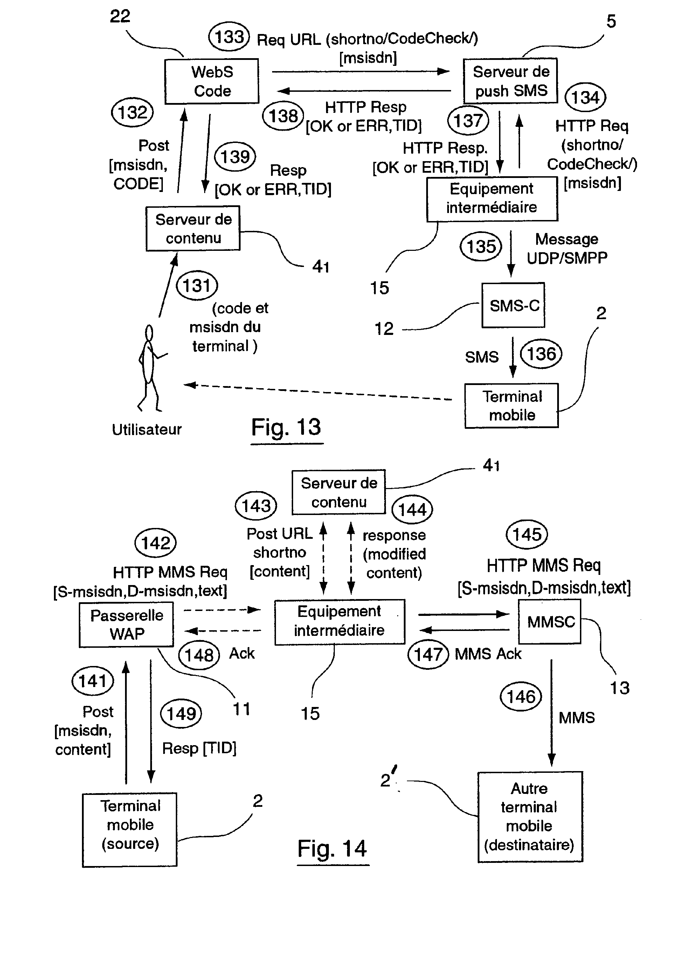

On présente maintenant, en relation avec les **figures 12 et 13,** un exemple de mécanisme de commerce électronique avec utilisation d'un code, ce mécanisme comprenant une session de service, selon le procédé de l'invention, de type monocanal (SMS) en mode « push ».

On distingue une première phase de génération et de fourniture du code à l'utilisateur (étapes référencées 121 à 129, décrites ci-après en relation avec la figure 12) et une seconde phase d'utilisation du code par l'utilisateur (étapes référencées 131 à 139, décrites ci-après en relation avec la figure 13).

Etape 121 : l'utilisateur fournit le numéro MSISDN de son terminal mobile 2 au serveur de contenu 4₁.

Etape 122 : le serveur de contenu 4₁ envoie une requête (« POST ») à un serveur de gestion de codes 22 (« WebS Code »), avec en paramètres : le numéro MSISDN du terminal 2, un texte (en option) et un identifiant de service (« service ID ») (en option ou implicite). L'objectif est que le serveur de gestion de codes 22 fournisse un code au terminal 2 que ce dernier pourra utiliser ultérieurement pour recevoir des données appartenant à un domaine de service.

Etape 123 : le serveur de gestion de codes 22 génère un code. Puis, il émet une requête HTTP vers le serveur de push SMS 5, afin que ce dernier fournisse le code au terminal mobile 2, via le SMS-C 12. Avec cette requête HTTP, le serveur de gestion de codes 22 passe les paramètres suivants : le code précité, le numéro MSISDN du terminal 2 et le texte précité. L'utilisation du serveur de push SMS 5 permet d'isoler l'équipement intermédiaire 15a du serveur de gestion de codes 22, qui est « en contact » avec le réseau Internet.

Etapes 124 et 125 : le serveur de push SMS 5 émet une requête HTTP destinée au SMS-C 12, avec les paramètres précités (code, numéro MSISDN et texte). La requête émise par le serveur de push SMS 5 est redirigée vers l'équipement intermédiaire 15. Ce dernier crée et gère une session de service relative au code. L'équipement intermédiaire 15 passe la requête précitée au SMS-C 12.

Etape 126 : le SMS-C 12 envoie un SMS, contenant le code, au terminal mobile 2.

Etape 127 : l'équipement intermédiaire 15 fournit une réponse au serveur de push SMS 5, avec en paramètres : la décision prise quant à la transmission du code à l'utilisateur au vu de la définition du service (par exemple « OK » si le code peut être transmis et « NOK » dans le cas contraire) et un paramètre (« TID ») identifiant de manière unique la session de service. Ce dernier paramètre peut être omis dans le cas où le code ne peut pas être transmis (« NOK »).

Etapes 128 et 129 : le serveur de push SMS 5, puis le serveur de gestion de codes 22, font parvenir la réponse, fournie par l'équipement intermédiaire 15, jusqu'au serveur de contenu 4₁.

Etape 131 : ultérieurement, pour recevoir des données appartenant au domaine de service, le terminal 2 fournit le code au serveur de contenu 4₁.

Etape 132 : le serveur de contenu 4₁ envoie une requête (« POST ») au serveur de gestion de codes 22, avec en paramètres : le code, le numéro MSISDN du terminal 2 et un identifiant de service (en option ou implicite).

Etape 133 : le serveur de gestion de codes 22 émet une requête vers le serveur de push SMS 5, afin que ce dernier passe le code à l'équipement intermédiaire 15. Avec cette requête, le serveur de gestion de codes 22 passe les paramètres suivants : le code précité et le numéro MSISDN du terminal 2.

Etape 134 : le serveur de push SMS 5 transmet une requête HTTP à l'équipement intermédiaire 15, avec les paramètres suivants : code et numéro MSISDN. L'équipement intermédiaire 15 détermine si le code est valide ou non, en fonction d'au moins un critère déterminé contenu dans une définition du service. Par exemple, en fonction de la définition du service, il fait en sorte qu'au cours de la session, le code ne soit valable qu'un nombre prédéterminé de fois (par exemple une seule fois), et/ou que le code ne soit valable que pendant une durée prédéterminée, etc. Il peut également conditionner l'accès à des ressources réseau (par exemple l'accès à un site WAP, l'envoi de message MMS à tarif préférentiel, ...) à la fourniture ultérieure du code par l'utilisateur.

Etape 137 : l'équipement intermédiaire 15 fournit une réponse au serveur de push SMS 5, avec en paramètres : une information (« OK or ERR ») sur la validité du code au vu de la définition du service et un paramètre (« TID ») identifiant de manière unique la session de service.

Etapes 138 et 139 : le serveur de push SMS 5, puis le serveur de gestion de codes 22, font parvenir la réponse, fournie par l'équipement intermédiaire 15, jusqu'au serveur de contenu 4₁.

Optionnellement, si l'on souhaite notifier l'utilisateur final du fait que son code est accepté et donc qu'il est facturé, on met en oeuvre les étapes 135 et 136 présentées ci-après.

Etape 135 (optionnelle) : l'équipement intermédiaire 15 envoie au SMS-C 12 un message destiné au terminal mobile 2 et contenant une information sur la validité (acceptation ou non) du code au vu de la définition du service.

Etape 136 : le SMS-C 12 envoie un SMS, contenant cette information de validité, au terminal mobile 2.

On présente maintenant, en relation avec la **figure 14,** un exemple de mécanisme de service « pair à pair » (« peer to peer ») permettant de modifier et/ou compléter des messages, ce mécanisme comprenant une session de service, selon le procédé de l'invention, de type monocanal (MMS).

Les éléments impliqués dans cet exemple ont déjà été discutés en détail ci-dessus, en relation avec la figure 1, à savoir : le terminal mobile 2, l'un des serveurs de contenu 4₁, l'équipement intermédiaire 15, la passerelle WAP 11 et le MMS-C 13.

Etape 141 : le terminal mobile (terminal source) 2 émet vers la passerelle WAP 11 une requête d'envoi d'un message MMS vers un autre terminal mobile (terminal destinataire) 2', le contenu de ce message MMS devant être modifié et/ou complété par le serveur de contenu 4_{1,} avec des données appartenant à un domaine de service (par exemple des données publicitaires, des images, une signature, ...). On passe comme paramètres de la requête le numéro MSISDN du terminal destinataire 2' et le contenu (« content » ou « text ») du message MMS à envoyer.

Etape 142 : la passerelle WAP 11 émet une requête HTTP destinée au MMS-C 13, avec les paramètres suivants : numéro MSISDN du terminal source 2 (S-MSISDN), numéro MSISDN du terminal destinataire 2' (D-MSISDN) et le contenu (« text »).

Etape 143 : la requête émise par la passerelle WAP 11 est redirigée vers l'équipement intermédiaire 15. Ce dernier gère une session du service demandé par le terminal source 2. Il gère par exemple les aspects de facturation en relation avec le système de facturation (non représenté). Par ailleurs, il convertit la requête précitée en une autre requête HTTP qu'il transmet au serveur de contenu 4₁. Il s'agit d'une requête HTTP vers une adresse URL correspondant, selon une table prédéterminée, au numéro court du service. Cette requête HTTP possède comme paramètre le contenu précité.

Etape 144 : le serveur de contenu 4₁ modifie et/ou complète la requête qu'il reçoit, en complétant et/ou en modifiant le contenu passé en paramètre, puis retourne à l'équipement intermédiaire 15 la requête ainsi modifiée et/ou complétée.

Etape 145 : l'équipement intermédiaire 15 convertit la requête modifiée et/ou complétée, transmise par le serveur de contenu 4₁, en une requête compréhensible par le MMS-C 13, et l'envoie à ce dernier.

Etape 146 : le MMS-C 13 envoie au terminal destinataire 2' un MMS dont le contenu a été modifié et/ou complété conformément au service demandé.

Etapes 147 à 149 : le MMS-C 13 émet un accusé de réception (« MMS Ack ») du MMS précité (voir étape 146 ci-dessus) par le terminal destinataire 2'. Cet accusé de réception est redirigé vers l'équipement intermédiaire 15 qui le transmet au terminal source 2, via la passerelle WAP 11.

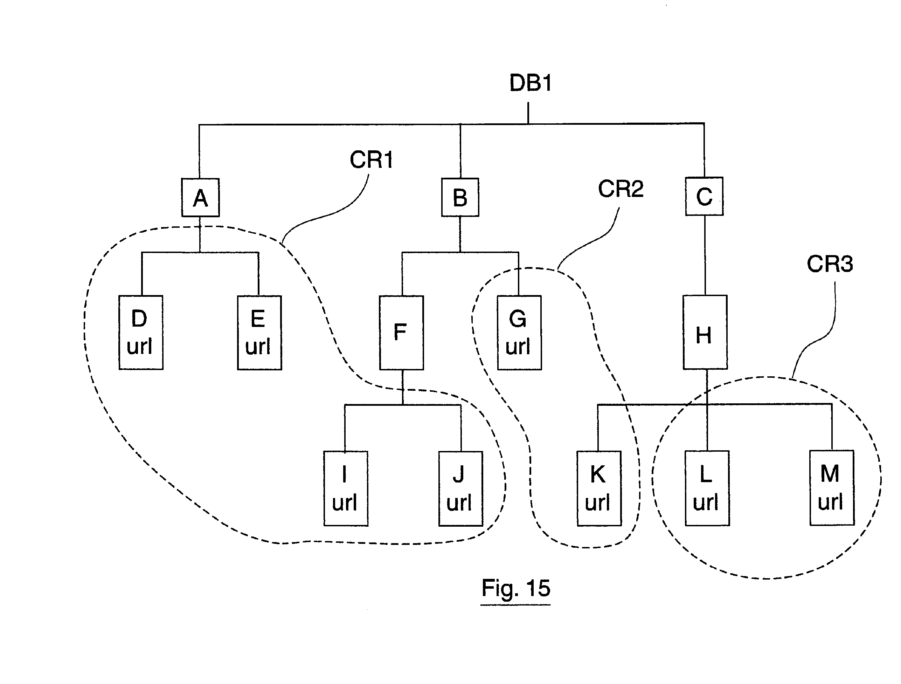

On présente maintenant, en relation avec la **figure 15,** un exemple de structure d'une base d'informations DB1 stockant les données gérées par le premier serveur de contenu 4₁ apparaissant sur la figure 1. Ces données sont essentiellement stockées sous la forme de fichiers (ou « pages ») repérés par le sigle url. Ainsi, les fichiers Durl et Eurl sont rattachés à un index A de premier niveau dans la structure arborescente de la base DB1. Les fichiers Iurl et Jurl sont rattachés à un index F de deuxième niveau lui-même rattaché à un index B de premier niveau. Le fichier Gurl est rattaché directement à cet index B de premier niveau. Les fichiers Kurl, Lurl et Murl sont rattachés à un index H de deuxième niveau lui-même rattaché à un index C de premier niveau. Parmi ces données, on définit un premier centre de ressources CR1, contenant les fichiers Durl, Eurl, Iurl et Jurl, un euxième centre de ressources CR2, contenant les fichiers Gurl et Kurl, et un troisième centre de ressources CR3, contenant les fichiers Lurl et Murl. Des bases d'informations stockant les données gérées par les deuxième 4₂ et troisième 4₃ serveurs de la figure 1 sont organisées de la même manière.

A titre d'exemple, les trois domaines de service suivants sont définis :
- un premier domaine de service comprenant le premier centre de ressources CR1 du premier serveur 4₁, un premier centre de ressource (non illustré) du deuxième serveur 4₂ et un premier centre de ressources (non illustré) du troisième serveur 4₂;
- un deuxième domaine de service comprenant le deuxième centre de ressources CR2 du premier serveur 4₁, un troisième centre de ressource (non illustré) du deuxième serveur 4₂ et un deuxième centre de ressources (non illustré) du troisième serveur 4₂ ;
- un troisième domaine de service comprenant le troisième centre de ressources CR3 du premier serveur 4₁, un deuxième centre de ressource (non illustré) du deuxième serveur 4₂ et un troisième centre de ressources (non illustré) du troisième serveur 4₃.

Lorsqu'une session de service visant des données appartenant au premier domaine de service est ouverte, les fichiers Gurl, Kurl Lurl et Murl sont exclus de ce premier domaine de service. Cela signifie que ces fichiers sont accessibles mais ils ne le sont pas dans les conditions définies en relation avec le premier domaine de service.

Chacun des domaines de services figure par exemple sous la forme d'une table de description, accessible par l'équipement intermédiaire 15. Chaque domaine de service est par exemple représenté, dans cette table de description, par la notation compacte d'un ou plusieurs sous-cônes d'une structure hiérarchique. Ceci implique que les données du réseau externe soient stockées dans un système de fichiers présentant une telle structure hiérarchique. C'est notamment le cas des pages d'informations des sites web. Par sous-cône, on entend alors soit une page (associée à une adresse URL) correspondant à une feuille de l'arbre représentant la structure hiérarchique, soit un noeud de l'arbre précité et toutes les feuilles se trouvant sous ce noeud.

## Revendications

1. Procédé de gestion de la fourniture, à au moins un terminal (2, 7) d'au moins un réseau de communication (1, 6), de données gérées par au moins un serveur de contenu (4₁ à 4₃) d'au moins un réseau externe (3),
ledit au moins un terminal pouvant demander et/ou recevoir lesdites données via au moins deux canaux de fourniture de données (8, 9, 10, 14) entre ledit au moins un terminal et ledit au moins un serveur de contenu,
**caractérisé en ce qu'**on définit au moins un domaine de service, correspondant à au moins une portion des données d'au moins un desdits serveurs,
**en ce que**, lors de la fourniture audit au moins un terminal de données appartenant audit domaine de service, on gère, dans au moins un équipement intermédiaire (15) traversé par lesdits au moins deux canaux et participant à la liaison entre ledit au moins un réseau de communication et ledit au moins un réseau externe, une session de service au cours de laquelle est utilisé au moins un desdits canaux,
et **en ce qu'**on effectue au moins un traitement particulier dans le cadre de ladite session de service.

2. Procédé selon la revendication 1, **caractérisé en ce qu'**un seul desdits canaux (8, 9, 10, 14) est utilisé au cours de ladite session de service, dite session de service monocanal.

3. Procédé selon la revendication 1, **caractérisé en ce qu'**au moins deux desdits canaux (8, 9, 10, 14) sont utilisés au cours de ladite session de service, dite session de service multicanal.

4. Procédé selon l'une quelconque des revendications 1 à 3, **caractérisé en ce que** ledit au moins un terminal appartient au groupe comprenant :
- des terminaux mobiles (2) ;
- des terminaux fixes (7).

5. Procédé selon l'une quelconque des revendications 1 à 4, **caractérisé en ce que** ledit au moins un réseau externe (3) est un réseau de type Internet,
**en ce que** lesdits serveurs de données sont organisés en sites comprenant chacun une pluralité de pages,
et **en ce que** chaque domaine de service correspond à des pages prédéterminées d'au moins un site.

6. Procédé selon l'une quelconque des revendications 1 à 5, **caractérisé en ce que** lesdits canaux de fourniture de données appartiennent au groupe comprenant :
- des canaux de type WAP (« Wireless Application Protocol ») (8) ;
- des canaux de type SMS (« Short Message service ») (9) ;
- des canaux de type MMS (« Multimedia Message service ») (10) ;
- des canaux de type EMS (« Enhanced Message service ») ;
- des canaux de type SVI (« Service Vocal Interactif ») ;
- des canaux de type WEB (14).

7. Procédé selon l'une quelconque des revendications 1 à 6, **caractérisé en ce qu'**il comprend les étapes préalables suivantes :
- un terminal, dit terminal demandeur/receveur, dudit au moins un réseau de communication émet, via au moins un desdits canaux, au moins une requête en vue de la réception de données appartenant audit domaine de service ;
- ladite requête est redirigée vers ledit au moins un équipement intermédiaire qui ouvre ladite session de service ;
et **en ce que**, au cours de ladite session de service :
- ledit au moins un équipement intermédiaire redirige lui-même la requête vers ledit au moins un serveur de contenu ;
- ledit au moins un serveur de contenu retourne audit au moins un équipement intermédiaire une réponse comprenant au moins un message contenant lesdites données ;
- ledit au moins un équipement intermédiaire transmet, via au moins un desdits canaux, la réponse au terminal demandeur/receveur.

8. Procédé selon l'une quelconque des revendications 1 à 6, **caractérisé en ce qu'**il comprend les étapes préalables suivantes :
- un premier terminal, dit terminal demandeur, d'un premier réseau de communication émet, via au moins un desdits canaux, au moins une requête en vue de la fourniture, à un second terminal, dit terminal receveur, d'un second réseau de communication confondu ou non avec ledit premier réseau de communication, de données appartenant audit domaine de service ;
- ladite requête est redirigée vers ledit au moins un équipement intermédiaire qui ouvre ladite session de service ;
et **en ce que**, au cours de ladite session de service :
- ledit au moins un équipement intermédiaire redirige lui-même la requête vers ledit au moins un serveur de contenu ;
- ledit au moins un serveur de contenu fournit audit au moins un équipement intermédiaire une réponse comprenant au moins un message contenant lesdites données ;
- ledit au moins un équipement intermédiaire transmet, via au moins un desdits canaux, la réponse audit second terminal receveur.

9. Procédé selon l'une quelconque des revendications 7 et 8, **caractérisé en ce que**, au cours de ladite session de service et avant l'étape de transmission de la requête audit au moins un serveur de contenu par ledit au moins un équipement intermédiaire :
- ledit au moins un équipement intermédiaire se procure auprès d'un système de facturation (16) auquel il est relié un avis de facturation relatif à la fourniture de la réponse par ledit au moins un serveur de contenu ;
- ledit au moins un équipement intermédiaire transmet pour accord ledit avis de facturation au terminal demandeur/receveur, ou au terminal demandeur et/ou au terminal receveur ;
- si ledit au moins un équipement intermédiaire reçoit un accord sur l'avis de facturation, il effectue l'étape de transmission de la requête audit au moins un serveur de contenu.

10. Procédé selon l'une quelconque des revendications 1 à 6, **caractérisé en ce qu'**il comprend les étapes préalables suivantes :
- ledit au moins un serveur de contenu émet au moins une requête en vue de la fourniture audit au moins terminal, par un serveur d'envoi automatique (5) dudit au moins un réseau externe, de données appartenant audit domaine de service ;
- ledit serveur d'envoi automatique émet, via au moins un desdits canaux, au moins un message contenant lesdites données et destiné audit au moins terminal ;
- ledit au moins un message est redirigé vers ledit au moins un équipement intermédiaire qui ouvre ladite session de service,
et **en ce que**, au cours de ladite session de service, ledit au moins un équipement intermédiaire transmet, via au moins un desdits canaux, ledit au moins un message au terminal.

11. Procédé selon l'une quelconque des revendications 1 à 6, **caractérisé en ce qu'**il comprend les étapes préalables suivantes :
- un premier terminal dudit au moins un réseau de communication émet, via au moins un desdits canaux, au moins un message destiné à un second terminal après avoir été modifié et/ou complété avec des données appartenant audit domaine de service ;
- ledit au moins un message est redirigé vers ledit au moins un équipement intermédiaire qui ouvre ladite session de service ;
et **en ce que**, au cours de ladite session de service :
- ledit au moins un équipement intermédiaire redirige lui-même ledit au moins un message vers ledit au moins un serveur de contenu ;
- ledit au moins un serveur de contenu modifie et/ou complète ledit au moins un message, et retourne audit au moins un équipement intermédiaire ledit au moins un message modifié et/ou complété ;
- ledit au moins un équipement intermédiaire transmet, via au moins un desdits canaux, ledit au moins un message modifié et/ou complété au second terminal.

12. Procédé selon l'une quelconque des revendications 1 à 6, **caractérisé en ce qu'**il comprend les étapes préalables suivantes :
- un utilisateur fournit un identifiant (MSISDN) d'un terminal audit au moins un serveur de contenu ;
- ledit au moins un serveur de contenu émet au moins une requête en vue de la fourniture audit terminal, par un serveur de gestion de codes (22) dudit au moins un réseau externe, d'un code destiné à être utilisé ultérieurement afin de recevoir des données appartenant audit domaine de service ;
- le serveur de gestion de codes génère ledit code puis émet une requête en vue de la fourniture du code au terminal, par un serveur d'envoi automatique ;
- le serveur d'envoi automatique émet, via au moins un desdits canaux, au moins un message contenant le code destiné au terminal ;
- ledit au moins un message contenant le code est redirigé vers ledit au moins un équipement intermédiaire qui ouvre ladite session de service ;
et **en ce que**, au cours de ladite session de service :
- ledit au moins un équipement intermédiaire transmet, via au moins un desdits canaux, ledit au moins un message contenant le code au terminal ;
- ultérieurement, pour recevoir des données appartenant au domaine de service, le terminal fournit ledit code audit au moins un serveur de contenu ;
- ledit au moins un serveur de contenu passe le code au serveur de gestion de codes, qui lui-même le passe à l'équipement intermédiaire ;
- l'équipement intermédiaire détermine si le code est valide ou non, en fonction d'au moins un critère déterminé contenu dans une définition du service appliqué dans ladite session de service, et informe ledit au moins un serveur de contenu, via ledit serveur de gestion de codes, du caractère valide ou non du code.

13. Procédé selon l'une quelconque des revendications 7 à 12, **caractérisé en ce que**, au cours d'une même session, ledit au moins un équipement intermédiaire traite au moins deux requêtes successives émises par ledit au moins un terminal et/ou au moins deux messages émis par ledit au moins un serveur de contenu ou ledit serveur d'envoi automatique.

14. Procédé selon l'une quelconque des revendications 1 à 13, **caractérisé en ce que** ledit au moins un traitement particulier effectué dans le cadre de ladite session de service comprend au moins une des opérations appartenant au groupe comprenant :
- une tarification particulière des données et/ou du temps de connexion audit domaine de service ;
- une notification d'entrée dans ledit domaine de services ;
- une demande de confirmation par le terminal avant l'accès audit domaine de service ;
- une notification de sortie dudit domaine de services ;
- une demande de confirmation par le terminal avant la sortie dudit domaine de service ;
- un contrôle d'autorisation d'accès audit domaine de service ;
- un enrichissement d'une base de données client ;
- une transmission de données ou de message particulier, en fonction d'informations contenues dans une base de données client et/ou dans une requête vers un desdits serveurs ;
- une modification d'une requête vers un desdits serveurs ;
- une modification du flux de données transmis vers le terminal ;
- une action par défaut, lorsqu'on n'accède pas à un desdits domaines de services.

15. Procédé selon la revendication 14, **caractérisé en ce que** ladite tarification particulière tient compte d'au moins un des aspects suivants :
- un coût fixe par session de service, pour l'accès audit domaine de service ;
- un coût proportionnel au volume de données transmis lors de la session de service ;
- un coût proportionnel à la durée de la session de service ;
- un coût fonction de la date et/ou de l'heure de la session de service ;
- un coût fonction de l'identité de l'utilisateur du terminal ;
- un coût fonction du mode d'accès.

16. Procédé selon l'une quelconque des revendications 1 à 15, **caractérisé en ce que** ledit au moins un domaine de service figure sous la forme d'une table de description accessible par ledit au moins un équipement intermédiaire.

17. Procédé selon la revendication 16, les données gérées par ledit au moins un serveur de contenu étant stockées dans un système de fichiers présentant une structure hiérarchique, **caractérisé en ce que** chaque domaine de service est représenté, dans ladite table de description, par la notation compacte d'un ou plusieurs sous-cônes de ladite structure hiérarchique.

18. Procédé selon l'une quelconque des revendications 1 à 17, **caractérisé en ce qu'**il comprend une étape de clôture d'une session de service courante, effectuée lorsqu'au moins une condition de fin de session est vérifiée.

19. Procédé selon la revendication 18, **caractérisé en ce que** ladite au moins une condition de fin de session de service appartient au groupe comprenant :
- détection d'une requête d'accès par le terminal à des données non comprises dans le domaine de service pour lequel la session de service courante est ouverte ;
- détection d'une requête spécifique, dite de fin de session de service, émise par le terminal ;
- détection du dépassement d'une période maximale d'inactivité du terminal au cours de la session de service courante.

20. Procédé selon l'une quelconque des revendications 1 à 19, **caractérisé en ce que** lorsqu'il communique avec ledit au moins un serveur de contenu, au cours de ladite session de service, ledit au moins un équipement intermédiaire utilise un identifiant opaque du terminal (OpaqueID), de façon à masquer audit au moins un serveur de contenu un identifiant réel du terminal (MSISDN).

21. Procédé selon l'une quelconque des revendications 1 à 20, **caractérisé en ce que** lorsqu'il communique avec ledit au moins un serveur de contenu, au cours de ladite session de service, ledit au moins un équipement intermédiaire utilise un identifiant de session (TID).

22. Procédé selon l'une quelconque des revendications 1 à 21, **caractérisé en ce que** ledit au moins un équipement intermédiaire gère une fonction de réservation de crédits pouvant être partagés par plusieurs sessions de service relatives à un même utilisateur et se déroulant au moins en partie simultanément.

23. Système de gestion de la fourniture, à au moins un terminal d'au moins un réseau de communication, de données gérées par au moins un serveur de contenu d'au moins un réseau externe,
ledit au moins un terminal pouvant demander et/ou recevoir lesdites données via au moins deux canaux de fourniture de données entre ledit au moins un terminal et ledit au moins un serveur de contenu,
**caractérisé en ce que** ledit système comprend :
- des moyens de définition d'au moins un domaine de service, correspondant à au moins une portion des données d'au moins un desdits serveurs ;
- des moyens de détection de la fourniture audit au moins un terminal de données appartenant audit domaine de service ;
- des moyens de gestion de sessions de service, permettant de gérer au moins une session de service, au cours de laquelle est utilisé au moins un desdits canaux, lorsque lesdits moyens de détection détectent la fourniture audit au moins un terminal de données appartenant audit domaine de service ; au moins un traitement particulier étant effectué dans le cadre de ladite session de service, et **en ce que** lesdits moyens de gestion de sessions de service sont compris dans au moins un équipement intermédiaire traversé par lesdits au moins deux canaux et participant à la liaison entre ledit au moins un réseau de communication et ledit au moins un réseau externe.

24. Système selon la revendication 23, **caractérisé en ce que** lesdits moyens de gestion de sessions de service comprennent :
- des moyens de contrôle de service, permettant de maintenir les sessions de service en fonction d'une part d'une définition déterminée d'un service associé à chaque domaine de service et d'autre part d'évènements qui sont communiqués auxdits moyens de contrôle de service par au moins un moyen d'interfaçage ;
- pour chaque canal de fourniture de données, un moyen d'interfaçage spécifique (proxy WAP, proxy SMS, ...) permettant de communiquer auxdits moyens de contrôle de service des évènements relatifs aux sessions de service et circulant sur ledit canal, et de recevoir de la part desdits moyens de contrôle de service des instructions relatives à l'envoi d'informations aux terminaux et/ou aux serveurs de contenu.

25. Système selon la revendication 24, **caractérisé en ce que** lesdits moyens de contrôle de service communiquent avec au moins un système de facturation, de façon à obtenir pour chaque session de service des informations de facturation et/ou valorisation et/ou autorisation dans le cas d'un mécanisme de pré-paiement.

26. Système selon l'une quelconque des revendications 24 et 25, **caractérisé en ce qu'**un seul desdits moyens d'interfaçage, dit moyen d'interfaçage principal, comprend des moyens de communication directe avec lesdits moyens de contrôle de service, et **en ce que** chacun des autres moyens d'interfaçage, dit moyen d'interfaçage secondaire, comprend des moyens de communication indirecte avec lesdits moyens de contrôle de service, via ledit moyen d'interfaçage principal.

27. Système selon la revendication 26, **caractérisé** en ce ledit moyen d'interfaçage principal est commun à un canal de type WAP et à un canal de type WEB (proxy WAP/WEB).

28. Equipement intermédiaire **caractérisé en ce qu'**il comprend des moyens pour mettre en oeuvre le procédé selon l'une quelconque des revendications 1 à 22.

29. Equipement intermédiaire selon la revendication 28, du type compris dans un système de gestion de la fourniture, à au moins un terminal d'au moins un réseau de communication, de données gérées par au moins un serveur de contenu d'au moins un réseau externe,
ledit au moins un terminal pouvant demander et/ou recevoir lesdites données via au moins deux canaux de fourniture de données entre ledit au moins un terminal et ledit au moins un serveur de contenu,
ledit système comprenant :
- des moyens de définition d'au moins un domaine de service, correspondant à au moins une portion des données d'au moins un desdits serveurs ;
- des moyens de détection de la fourniture audit au moins un terminal de données appartenant audit domaine de service,
**caractérisé en ce que** ledit équipement intermédiaire est traversé par lesdits au moins deux canaux et participe à la liaison entre ledit au moins un réseau de communication et ledit au moins un réseau externe,
et **en ce que** ledit équipement intermédiaire comprend des moyens de gestion de sessions de service, permettant de gérer au moins une session de service, au cours de laquelle est utilisé au moins un des canaux, lorsque les moyens de détection détectent la fourniture audit au moins un terminal de données appartenant au domaine de service ; au moins un traitement particulier étant effectué dans le cadre de ladite session de service.
